# EUROPÄISCHE PATENTSCHRIFT

(11) **EP 2 375 517 B1**
(45) Veröffentlichungstag und Bekanntmachung des Hinweises auf die Patenterteilung: **24.12.2014**
(21) Anmeldenummer: 11002251.4
(22) Anmeldetag: 18.03.2011
(51) Int. Cl.: H02G 3/04, H02G 3/30

(54) **Flachkabel-Umlenkvorrichtung und Installationssatz für eine elektrische Installation mit Funktionserhalt im Brandfall**
Flat cable steering device and installation set for an electric installation which retains its function in a fire
Dispositif de déviation à câble plat et ensemble d'installation pour une installation électrique dotée d'un fonctionnement continu en cas d'incendie

(30) Priorität: 10.04.2010 DE 102010014530
(43) Veröffentlichungstag der Anmeldung: 12.10.2011
(73) Patentinhaber: Woertz AG, 4132 Muttenz 1 (CH)
(72) Erfinder: Onodi, Tamas, 8800 Thalwil (CH)
(74) Vertreter: von Samson-Himmelstjerna, Friedrich

(56) Entgegenhaltungen:
- EP-A1- 2 375 505
- EP-A1- 2 385 532
- US-A- 4 406 916
- US-A1- 2005 274 842

## Beschreibung

### Gebiet der Erfindung

Die Erfindung betrifft eine Flachkabel-Umlenkvorrichtung und einen Installationssatz für eine elektrische Installation mit Funktionserhalt im Brandfall.

### Hintergrund der Erfindung

In größeren Gebäuden, Verkehrsbauwerken (wie z.B. Tunnels) und Schiffen kann die Evakuierungszeit 30 min und mehr betragen. Diese sind daher in der Regel mit elektrischen Noteinrichtungen ausgerüstet, die im Brandfall zumindest für die Evakuierungszeit mit elektrischer Energie versorgt werden müssen, um eine Evakuierung zu ermöglichen. Hierzu gehören z.B. Rauchabzugsgebläse, Notbeleuchtungen, Hinweisschilder usw.

Die Eignung der elektrischen Installation zur Stromversorgung auch unter Brandeinwirkung wird i.a. als "Funktionserhalt" (engl.: "Circuit Integrity") bezeichnet. Der Funktionserhalt ist durch verschiedene Normen standardisiert. Beispielsweise werden Kabel gemäß der Norm IEC 60331-11/-21/-23/-25 mit Spannung beaufschlagt und unter Flammeneinwirkung einer Temperatur größer 750°C über 90-180 Min. ausgesetzt. Nach einiger Zeit verlieren die Aderisolationen des Kabels der Flammeneinwirkung ihre Isolationsfähigkeit und es kommt zum Kurzschluss zwischen Kabeladern; dies bedeutet Funktionsverlust. Das Verhalten unter diesem Test wird durch "FE" mit der Angabe der Dauer des Funktionserhalts in Minuten angegeben; ein Kabel, das unter diesem Test einen Funktionserhalt über z.B. 90 Min. zeigt, wird also mit "FE90" bezeichnet. Ähnliche Normen sind BS 6387 cat. C und VDE 0472-814. Andere Normen betreffen den Funktionserhalt von Kabeln unter Einwirkung von Feuer und Wasser (womit z.B. die Wirkung von Sprinkleranlagen bei einem Brand dargestellt werden soll), so z.B. DS 6387 cat. W und VdS 3423. Weitere Normen betreffen Funktionserhalt von Kabeln unter Einwirkung von Feuer und mechanischen Stößen (womit beispielsweise die Wirkung von auf das Kabel herunterfallenden Teilen dargestellt werden soll, wie es bei einem Brand oft vorkommt), so EN 50200, EN 50362, und ES 6387 cat. Z. Daneben gibt es Normen, welche den Funktionserhalt nicht nur von Kabeln, sondern ganzer Installationssysteme betreffen. Dies bezeichnet man auch als "System-Funktionserhält" (engl.: "System Circuit Integrity"). Beim System-Funktionserhalt sind neben dem Kabel tragende Elemente (wie Kabelbefestigungen, -aufhängungen und -führungen) und elektrische Verbindungselemente (wie Verzweigungs- und Anschlussvorrichtungen) einbezogen, denn sie alle zusammen gewährleisten den Funktionserhalt einer gesamten Installation. Eine den System-Funktionserhalt betreffende Norm ist beispielsweise DIN 4102 Teil 12. Bei einem Test nach dieser Norm erfolgt die Beflammung und damit Erhitzung einer Gesamtinstallation auf einer Länge von 3 m gemäß einer bestimmten ansteigenden Einheitstemperaturkurve, die zunächst relativ steil ansteigt und dann immer flacher verläuft, bis sie nach 90 Min. ca. 900°C erreicht. Das Verhalten unter diesem Test wird durch "E" mit der Angabe der Dauer des Funktionserhalts in Minuten angegeben. "E90" bedeutet also System-Funktionserhalt über 90 Min.

Übliche Kabel füllen solche Funktionserhaltbedingungen nicht, da unter der Brandeinwirkung die Aderisolationen rasch schmelzen oder abbrennen und es dann durch Leiterberührung zum Kurzschluss kommt. Es bedarf daher zur Kurzschlussvermeidung spezieller Ausrüstungen, beispielsweise spezieller Aderisolationen. Allgemein ist die Erzielung höherer Funktionserhaltdauem technisch anspruchsvoll. Entsprechendes gilt hinsichtlich der relativ hohen Anforderungen, die die Systemfunktionserhalt-Normen an tragende Elemente und Verbindungselemente stellen.

Die Druckschrift US 2005/0274842 A1 betrifft eine Speichervorrichtung für ein Flachkabel für Computeranwendungen, die im Inneren mit zwei Kabelumlenkkörpern ausgerüstet ist, die vom zu speichernden Flachkabel umschlungen werden.

Die Druckschrift US 4,406,916 beschreibt eine Umlenkvorrichtung gemäß dem Oberbegriff des Anspruchs 1.

### Kurzfassung der Erfindung .

Die vorliegende Erfindung stellt eine Flachkabel-Umlenkvorrichtung gemäß Anspruch 1.

Ein anderer Aspekt betrifft eine ausgeführte elektrische Installation, die wenigstens eine Flachkabel-Umlenkvorrichtung der oben genannten Art und wenigstens ein Flachkabel mit mehreren, parallel nebeneinander in einer Ebene verlaufenden Starkstromadern umfasst. Das Flachkabel läuft über die Umlenkvorrichtung und ändert an ihr seine Richtung, wobei die Kabelquerrichtung vor und nach der Umlenkvorrichtung horizontal verläuft, und wobei das Flachkabel den zylindrischen Kabelumlenkkörper wenigstens teilweise umschlingt.

Ein weiterer Aspekt betrifft einen Installationssatz für eine elektrische Installation mit Funktionserhalt im Brandfall, mit wenigstens einer Flachkabel-Umlenkvorrichtung der oben genannten Art und einem Flachkabel mit mehreren, parallel nebeneinander in einer Ebene verlaufenden Starkstromadern.

Eine Ausführungsform des Installationssatzes umfasst eine Flachkabelführung mit Funktionserhalt bei Brand, die wenigstens einen Träger für ein Flachkabel und eine Aufnahme aus feuerbeständigem isolierenden Material, wie Glas oder Keramik umfasst. Die Aufnahme ist auf dem Träger angeordnet, und ist so ausgebildet, dass das Flachkabel in sie eingelegt werden kann.

### Allgemeine Beschreibung der Flachkabel-Umlenkvorrichtung, des Installationssatzes und der elektrischen Installation, sowie deren fakultativen Ausgestaltung

Flachkabel sind nicht nur als Datenkabel verbreitet, sondern finden auch im Rahmen der Gebäudeinstallationstechnik für Starkstromleitungen Verwendung. Ein solches Starkstrom-Flachkabel und eine zugehörige Anschlussvorrichtung zum abisolierfreien Anzapfen des Flachkabels sind beispielsweise aus der DE-AS 2 206 187 bekannt. Unter "Starkstrom" wird in der vorliegenden Beschreibung Strom unter einer Spannung von wenigstens 100V (z.B. unter 120 V/60 Hz in Nordamerika, und 230 V/50 Hz in den meisten übrigen Ländern; Spannungsangaben beziehen sich auf jeweils eine Phase gegen Erde) zur Energieversorgung elektrischer Verbraucher verstanden; eine "Starkstromader" ist von den anderen Starkstromadern eines Kabels gegen solche Spannungen isoliert und typischerweise für Ströme von wenigstens 6A ausgelegt. Es sind auch Hybrid-Flachkabel mit Starkstromadern und Datenübertragungsadern bekannt (z.B. aus der EP 0 665 608 A2). Derartige Hybrid-Flachkabel sind angesichts ihres Starkstromteils ebenfalls als "Flachkabel mit Starkstromadern" anzusehen.

Die Erfinder der vorliegenden Erfindung haben erkannt, dass ein Flachkabel grundsätzlich besonders für Funktionserhalt geeignet ist. Bei üblichen Rundkabeln sind die Adern miteinander verdrillt. Im Brandfall kommen daher nach dem Abbrennen der Aderisolation die Aderleiter an den Kreuzungspunkten aufeinander zu liegen. Beim Flachkabel verlaufen Aderleiter hingegen ohne Kreuzungspunkte im Kabel. Daher verhält sich ein Flachkabel hinsichtlich der Kurzschlussgefahr von vornherein günstiger. Zudem hat ein Flachkabel praktisch keine inneren Spannungen, wie sie für verdrillte Rundkabel typisch sind, hat also keine ausgeprägte Tendenz wie das Rundkabel, sich beim Verbrennen der Isolation zu verwerfen.

Ausgehend von der Erkenntnis der grundsätzlich günstigeren Eignung eines Flachkabels für Funktionserhalt geht es der vorliegenden Erfindung darum, eine Vorrichtung bereitzustellen, die es erlaubt, ein Flachkabel so um eine Ecke zu führen, dass der Funktionserhalt im Brandfall gewährleistet ist, also dass ein Kurzschluss der Starkstromadern des Flachkabels z.B. durch Aderberührung verhindert wird. Diese Vorrichtung wird "Flachkabel-Umlenkvorrichtung" genannt.

Bei der herkömmlichen Gebäudeinstallation mit Flachkabeln erfolgt die Eckführung der Flachkabel im Allgemeinen auf eine Art und Weise, die eher ungünstig für Funktionserhalt ist, und zwar wird ein horizontal verlaufendes Flachkabel vor einer vertikalen Ecke im Allgemeinen vertikal gestellt; in der Ecke wird es dann einfach um 90° abgebogen. Diese Technik hat jedoch den Nachteil, dass durch das Senkrechtstellen des Flachkabels dessen Starkstromadern übereinander liegen, und daher die Gefahr besteht, dass beim Abbrennen der Kabelisolierung die vertikal übereinander liegenden Adern zusammensinken, sich berühren und damit einen Kurzschluss herbeiführen. Der dem Flachkabel inhärente Vorteil hinsichtlich Funktionserhalt aufgrund der kreuzungsfreien Nebeneinanderanordnung der Adern wird mit dieser herkömmlichen Technik der Eckführung nicht genutzt. Hierfür wäre es vielmehr wünschenswert, wenn das Flachkabel vor und nach der Ecke horizontal liegen könnte und im Bereich der Eckbiegung jeglicher mechanischen Spannung auf die Starkstromadern vermieden wird, welche beim Abbrennen der Kabelisolation zu einer Berührung der Starkstromadern führen könnte. Die Erfinder haben erkannt, dass dieses Problem mit Hilfe eines zylindrischen Kabelumlenkkörpers gelöst wird, den das Flachkabel wenigstens teilweise umschlingt. Hiermit ist eine Richtungsänderung eines vor und nach der Umlenkvorrichtung horizontal verlaufenden Flachkabels erzielbar, wobei das Flachkabel nur gebogen wird, aber keine darüber hinausgehenden mechanischen Spannungen auf dieses ausgeübt werden, welche die Adern des Flachkabels bei einem Abbrennen der Kabelisolation in Berührung bringen könnten. Diese Eigenschaft einer Zylinderumschlingung fußt letztlich auf der aus der Differenzialgeometrie bekannten Eigenschaft einer Zylindermantelfläche, dass diese nämlich keine innere Krümmung besitzt. Ein auf einer Zylindermantelfläche gezeichnetes Dreieck hat nämlich eine Winkelsumme von 180°, genau wie in der Ebene, aber anders als ein auf einer Kugel oder einer Sattelfläche gezeichnetes Dreieck, welches eine Winkelsumme größer bzw. kleiner 180° besitzt. Aufgrund dieser fehlenden inneren Krümmung lässt sich ein zwar biegsamer, aber nicht dehnbarer Streifen um einen Zylinder wickeln, und zwar nicht nur senkrecht, sondern auch schräg zur Zylinderachse.

Aufbauend auf diesen Erkenntnissen ist für die Umlenkvorrichtung nur sicherzustellen, dass die Umlenkvorrichtung selbst feuerbeständig ist, der Kabelumlenkkörper nicht leitend ist und von einer ggf. leitenden Halterung so weit beabstandet ist, dass es bei einem Abbrennen der Kabelisolation nicht zu einem Kurzschluss kommt. Entsprechend stellt die Erfindung eine Flachkabel-Umlenkvorrichtung mit Funktionserhalt im Brandfall bereit, die einen zylindrischen Kabelumlenkkörper aus feuerbeständigem isolierenden Material und eine Halterung für den zylindrischen Kabelumlenkkörper aus feuerbeständigem Material umfasst. Die Halterung ist so von diesem beabstandet, dass sie die Umschlingung des zylindrischen Umlenkkörpers mit dem Flachkabel erlaubt, ohne dieses zu berühren.

Die Erfindung lehrt auch eine elektrische Installation unter Verwendung wenigstens einer derartigen Flachkabel-Umlenkvorrichtung. Das Flachkabel weist mehrere parallel nebeneinander in einer Ebene verlaufende Starkstromadern auf. Es läuft über die Umlenkvorrichtung und ändert an ihr seine Richtung. Die Lehre der Erfindung bezüglich der elektrischen Installation ist nicht auf rein horizontal verlaufende Flachkabel beschränkt, sondern eignet sich gleichermaßen für Fälle, in denen das Flachkabel unter einer Steigung verlegt ist (z.B. in einem geneigten Tunnel). Es genügt also, dass die Kabelquerrichtung vor und nach der Umlenkvorrichtung horizontal verläuft. Das Flachkabel umschlingt den zylindrischen Kabelumlenkkörper wenigstens teilweise.

Bei manchen Ausgestaltungen erfährt das Flachkabel an der Umlenkvorrichtung nur eine Höhenversetzung um den Durchmesser des zylindrischen Umlenkkörpers, aber keine Neigungsänderung. Es verläuft also mit seiner Längsrichtung vor und nach der Umlenkvorrichtung horizontal oder mit der gleichen Neigung. Die Achse des zylindrischen Kabelumlenkkörpers ist quer zur Winkelhalbierenden der Kabellängsrichtungen vor und nach der Umlenkvorrichtung orientiert. Bei einer rechtwinkligen Ecke verläuft die Winkelhalbierende des Eckwinkels unter einem spitzen Winkel von 45° zur Kabellängsrichtung vor der Umlenkvorrichtung. Die Achse des zylindrischen Kabelumlenkkörpers ist dann entsprechend unter einem stumpfen Winkel von 135° zur Kabellängsrichtung vor der Umlenkvorrichtung angeordnet.

Bei Ausgestaltungen, bei denen sich die Orientierung der Kabelebene nicht ändert, wird der zylindrische halb umschlungen, beträgt also der Umschlingungswinkel des Flachkabels auf dem Kabelumlenkkörper 180°. Theoretisch sind auch 1,5-2,5-... fache Umschlingungen möglich als Umschlingungswinkel von 720°, 900°, ...

Daneben kann die erfindungsgemäße Flachkabel-Umlenkvorrichtung auch vorteilhaft für Neigungsänderungen des Flachkabels sorgen, beispielsweise wenn ein Horizontale senkrecht nach oben oder unten beführt werden soll. Bei dieser Ausgestaltung einer elektrischen Installation ändert sich also die Kabellängsrichtung gegenüber der Horizontalen; die Achse des zylindrischen Kabelumlenkkörpers ist dann quer zur Kabellängsrichtung vor und nach der Umlenkvorrichtung orientiert. Der Umschlingungswinkel ist bei dieser Ausgestaltung gleich dem Umlenkwinkel; er beträgt bei dem genannten Beispiel einer rechtwinkligen Ecke also 90°.

Die Flachkabel-Umlenkvornchtung weist einen zylindrischen Kabelumlenkkörper aus feuerbeständigem isolierenden Material sowie eine Halterung für den zylindrischen Umlenkkörper aus feuerbeständigem Material auf. Die Halterung ist so vom zylindrischen Umlenkkörper beabstandet, dass sie dessen Umschlingung mit dem Flachkabel erlaubt, ohne dieses zu berühren.

Bei manchen Ausführungsformen ist der zylindrische Kabelumlenkkörper prolat, d.h. der Durchmesser des zylindrischen Kabelumlenkkörpers ist kleiner als dessen Zylinderhöhe.

Das feuerbeständige isolierende Material des zylindrischen Kabelumlenkkörpers ist beispielsweise Glas oder Keramik. Da die Starkstromadern des Flachkabels auch bei abgebrannter Kabelisolation die Halterung nicht berühren, kann die Halterung beispielsweise aus Metall gefertigt sein.

Wie oben erwähnt wurde, ist der zylindrische Kabelumlenkkörper mit seiner Zylinderachse senkrecht zur Winkelhalbierenden des Kabelumlenkwinkels anzuordnen. Je nach Umlenkwinkel können also unterschiedliche Montagewinkel erforderlich werden. Grundsätzlich ist es möglich, die Umlenkvorrichtung jeweils so auf der Unterlage zu befestigen, dass der Umlenkkörper unter dem nötigen Winkel angeordnet ist. Bei manchen Ausführungsformen ist hingegen die Halterung so ausgebildet, dass sie eine Anbringung des zylindrischen Kabelumlenkkörpers unter verschiedenen Winkeln relativ zur Halterung erlaubt. Die erleichtert die Montage der Umlenkvorrichtung, da nun bei der Befestigung auf der Unterlage der letztlich benötige Einstellwinkel nur noch ungefähr beachtet werden muss, und die Feineinstellung des Winkels des Kabelumlenkkörpers nach der Befestigung der Umlenkvorrichtung erfolgen kann. Auch ist es hiermit möglich, nach bereits erfolgter Befestigung der Umlenkvorrichtung einen anderen Umlenkwinkel zu realisieren, als denjenigen, für den die Befestigung erfolgt ist.

Bei manchen Ausführungsforinen sorgt eine Langlochbefestigung des Kabelumlenkkörpers an der Halterung dafür, dass der Kabelumlenkkörper unter verschiedenen Winkeln relativ zur Halterung angeordnet werden kann.

Um die den Kabelumlenkkörper umschlingenden Starkstromadern im Brandfall vor herab fallenden Gegenständen zu schützen, ist bei manchen Ausgestaltungen über dem zylindrischen Kabelumlenkkörper eine Abdeckung vorgesehen.

### Allgemeine Beschreibung des Installationssatzes und der elektrischen Installation sowie deren fakultativen Ausgestaltungen, besonders im Hinblick auf ein Flachkabel mit Funktionserhalt

Grundsätzlich ist es mit dem beschriebenen Aufbau der Flachkabel-Umlenkvorrichtung möglich, Funktionserhalt unter Verwendung eines herkömmlichen, nicht besonders für Funktionserhalt ausgerüsteten Flachkabels, z.B. nach Art des DE-AS 2 206 187 beschriebenen, zu erzielen. Dies ist - abgesehen von der oben erläuterten fehlenden Ausübung mechanischer Spannungen seitens der Umlenkvorrichtung - den eingangs genannten besonders günstigen Eigenschaften von Flachkabeln hinsichtlich der nicht überkreuzenden Leiter und der Abwesenheit innerer Spannungen geschuldet.

Vorteilhafterweise verwenden der Installationssatz und die ausgeführte elektrische Installation jedoch ein Flachkabel, das besonders für Funktionserhalt ausgerüstet ist. Hierbei um ein Flachkabel mit mehreren parallel nebeneinander in einer Ebene verlaufenden Starkstromadern, zwischen denen feuerbeständiges Isoliermaterial angeordnet. Eine Isolierhülle umgibt die Starkstromadern und das feuerbeständige Isoliermaterial. Dieses Isoliermaterial verhindert, dass sich die Leiter der Starkstromadern beispielsweise bei mechanischer Stoßbeaufschlagung berühren können. Die Starkstromadern und das feuerbeständige Isoliermaterial sind von einer Isolierhülle aus Kunststoff umgeben, welche im Nicht-Brandfall eine Lage definierende Einbettung für die Starkstromadern und das feuerbeständige Isoliermaterial bildet. Die Isolierhülle ist wiederum bei manchen Ausgestaltungen von einem Kabelmantel aus Kunststoff umgeben, welcher die Außenkontur des Flachkabels definiert, dem Kabel ggf. Beständigkeit gegen aggressive Substanzen verleiht und farbig markiert und beschriftet sein kann. Bei manchen Ausführungen übernimmt die Isolierhülle auch die Funktion des äußeren Kabelmantels.

Zur Schaffung eines Funktionserhaltkabels würde der Fachmann beim Rundkabel konventionellerweise daran denken, die herkömmlichen Aderisolierungen, mit denen z.B. die Adern eines herkömmlichen Rundkabels aufeinander liegen, aus feuerbeständigem Isoliermaterial zu fertigen. Bei dem Flachkabel erstreckt sich das feuerbeständige Isoliermaterial jedoch vorzugsweise stegartig zwischen den Starkstromadern von einer Starkstromader zur nächsten. Die Stege erstrecken sich z.B. parallel zur Kabelebene und liegen z.B. in der Mittelebene des Flachkabels, in der auch die Starkstromadern verlaufen. Das feuerbeständige Isoliermaterial bildet somit einen Abstandshalter für die Starkstromadern in Form eines Stegs, der auch dann erhalten bleibt, wenn sämtliche nicht-feuerbeständigen Isolationen abgebrannt sind. Das feuerbeständige Isoliermaterial umgibt die Starkstromadern somit nicht gleichmäßig in alle Richtungen, sondern erstreckt sich hauptsächlich nur in diejenige Richtung, in der sich eine benachbarte Starkstromader befindet. Dies ist diejenige Richtung, in der bei Verschiebung der Starkstromader hauptsächlich Kurzschlussgefahr droht.

Bei einer Ausgestaltung wird das feuerbeständige Isoliermaterial durch wenigstens eine feuerbeständige Isolierschicht gebildet. Bei einem einphasigen Flachkabel weist dieses im Allgemeinen zwei oder drei Starkstromadern auf, bei einem dreiphasigen Flachkabel sind es im Allgemeinen vier oder fünf Starkstromadern (je eine Ader pro Phase, und je eine Ader für Erde und Schutzleiter, wobei letztere zusammengefasst sein können). Die Isolierschicht erstreckt sich vorzugsweise über die gesamte Fläche zwischen den äußeren Starkstromadern, überdeckt also z.B. drei bzw. fünf Starkstromadern samt zwei bzw. vier Zwischenräume. Die feuerbeständige Isolierschicht umschließt dabei die Starkstromadern zumindest teilweise. Zwischen den Starkstromadern verläuft Isolierschicht zur Mittelebene des Flachkabels hin versetzt.

Bei manchen Ausgestaltungen wird das Kabel mit zwei feuerbeständigen Isolierschichten hergestellt, von denen eine von der einen Seite des Flachkabels und die andere von dessen anderer Seite aufgebracht wird. Die Isolierschichten können für die Herstellung auf ihren einander zugewandten Oberflächen mit Klebstoff versehen sein, so dass sie dort, wo sie aufeinander treffen (zwischen den Adern, in der durch die Adern definierten Mittelebene des Flachkabels), eine Klebverbindung eingehen. Die beiden feuerbeständigen Isolierschichten umschließen somit zusammen die Starkstromadern und bilden zwischen diesen isolierende feuerbeständige Stege aus.

Bei einer Ausgestaltung umfasst die genannte feuerbeständige Isolierschicht eine Glimmerschicht. Bei Ausgestaltungen mit je einer feuerbeständigen Isolierschichten auf Unter- und Oberseite sind also entsprechend z.B. zwei Glimmerschichten vorhanden. Glimmer ist ein gut spaltbares Tonerdesilikat, welches elektrisch isolierend und feuerbeständig ist.

Allerdings ist eine reine Glimmerschicht relativ schlecht verarbeitbar. Bei manchen Ausgestaltungen umfasst die feuerbeständige Isolierschicht ein flexibles Trägerband, z.B. ein Glasgewebeband. Die Glimmerschicht kann auf das flexible Trägerband geklebt sein. Das flexible Trägerband wird zusammen mit der Glimmerschicht bei der Herstellung des Flachkabels auf die Starkstromadern aufgebracht, z.B. aufgebügelt. Die beiden Glimmerschichten können dabei z.B. jeweils außen liegen (in diesem Fall sind die beiden Trägerbänder in der Mittelebene miteinander verklebt), oder jeweils innen liegen (in diesem Fall sind die beiden Glimmerbänder in der Mittelebene miteinander verklebt), oder es kann eine Glimmerschicht auf ein Trägerband stoßen (in diesem Fall sind Glimmerschicht und Trägerband in der Mittelebene miteinander verklebt).

Beim herkömmlichen Flachkabel bestehen die Starkstromadern üblicherweise aus einem Leiter und einer den Leiter im Querschnitt ringförmig umschließenden Aderisolierung aus (nicht feuerbeständigem) Kunststoff. Ausgehend hiervon würde der Fachmann - wenn ihm die Lehre mitgeteilt worden sein sollte, ein Flachkabel zwecks Funktionserhalt mit einer feuerbeständigen Isolierschicht auszurüsten - wohl daran denken, die feuerbeständige Isolierschicht über den Aderisolierungen anzuordnen. Bei manchen Ausgestaltungen der Erfindung liegt hingegen die feuerbeständige Isolierschicht - bzw. beide feuerbeständigen Isolierschichten - unmittelbar an den Leitern der Starkstromadern an. Mit anderen Worten fehlen bei diesen Ausgestaltungen die Aderisolierungen aus Kunststoff. Es gibt vielmehr nur die eine bzw. die beiden feuerbeständigen Isolierschichten, und außen um diese eine gemeinsame Isolierhülle aus Kunststoff. Es wurde nämlich erkannt, dass nicht feuerbeständiges Isoliermaterial zwischen den Aderleitern und der bzw. den Isolierschichten beim Verbrennen zur Gasbildung führten könnte, was möglicherweise die auf einer solchen Aderisolierung liegende Isolierschicht beschädigen könnte. Um derartiges auszuschließen, liegt die feuerbeständige Isolierschicht bei manchen Ausgestaltungen unmittelbar an den Leitern der Starkstromadern an, umschließt also keine nicht-feuerbeständige Isolierung.

Bei alternativen Ausgestaltungen hat das feuerbeständige Isoliermaterial zwischen den Starkstromadern nicht die Form von Stegen, sondern wird vielmehr durch jeweils zwischen zwei Starkstromadern längs verlaufende Isolierstäbe oder Isolierseile gebildet. Auch bei dieser alternativen Ausgestaltung verhindert das feuerbeständige Isoliermaterial zwischen den Starkstromadern, dass diese z.B. bei einer mechanischen Beaufschlagung des Kabels in Berührung kommen und damit einen Kurzschluss hervorrufen könnten.

Bei manchen Ausgestaltungen umfasst das Material der Isolierstäbe bzw. Isolierseile Glas- und/oder Keramikmaterial.

Bei manchen Ausgestaltungen wird die Funktionserhalteigenschaft dadurch weiter verbessert, dass die Isolierhülle ganz oder teilweise aus einem Kunststoffmaterial hergestellt ist, das mit Mineralstoff versetzt ist, der beim Abbrennen kristallisiert und so eine Kruste bildet. Diese Krustenbildung stabilisiert das Flachkabel im Brandfall zusätzlich in mechanischer Hinsicht und vermindert dadurch weiter das Kurzschlussrisiko. Bei dem besagten Mineralstoff kann es sich beispielsweise um einen oder mehrere Porzellanausgangsstoffe, wie Kaolin handeln.

Als weitere Maßnahme zur Verringerung der Gefahr von Kurzschlüssen bei Feuereinwirkung sind bei manchen Ausgestaltungen die Starkstromadern in einem Abstand voneinander angeordnet, der größer als der übliche Mindestabstand ist. Beispielsweise beträgt der Abstand benachbarter Starkstromadern von Leiteroberfläche zu Leiteroberfläche wenigstens das 2-fache, vorzugsweise wenigstens das 2,5-fache, und besonders vorzugsweise wenigstens das 3-fache des Durchmessers des Leiters der Hochspannungsadern. Der relativ große Abstand trägt zusätzlich zu der Einfügung von feuerbeständigem Isoliermaterial zwischen die Adern dazu bei, dass bei abgebrannter Isolierhülle die Adern z.B. auch bei Stoßbeaufschlagung nicht in Kontakt kommen.

Ein Verfahren zur Herstellung eines Brand-Funktionserhaltkabels der beschriebenen Art kann beispielsweise folgende Schritte umfassen:
(i) Die Leiter der Starkstromadern werden unter Spannung in ihrer später im Flachkabel einzunehmenden Lage (also parallel in einer Ebene mit Abstand zueinander) geführt;
(ii) an beiden Flachseiten werden an diese Leiteranordnung jeweils eine Schicht feuerbeständiges Isoliermaterial angedrückt, z.B. aufgebügelt. Die Schicht wird beispielsweise durch ein flexibles feuerbeständiges Trägerband (etwa ein Glasgewebeband) mit aufgeklebter Glimmerschicht gebildet und ist jeweils zu den Leitern hin mit Klebstoff versehen. Sie umschließt so die Leiter und verklebt zwischen den Leitern zu einer gemeinsamen Schicht feuerbeständigen Isoliermaterials;
(iii) die Isolierhülle wird auf die Schicht feuerbeständigen Isoliermaterials extrudiert;
(iv) ggf. wird noch ein äußerer Mantel auf die Isolierhülle extrudiert.

Diese Schritte werden z.B. in einem kontinuierlichen Prozess simultan an verschiedenen Stationen einer Produktionsstrasse durchgeführt, entlang derer sich das herzustellende Flachkabels stetig fortbewegt. Beispielsweise stehen am Anfang Leitertrommeln, von die die Leiter abgewickelt werden. Diese können dann als nächste Station eine Ausrichtvorrichtung durchlaufen, die sie in die besagte Lage bringen. Anschließend können die ausgerichteten Leiter als nächste Station eine Vorrichtung zum Andrücken bzw. Aufbügeln der feuerbeständigen Isolierschichten durchlaufen. Die nächste Station bildet ein Extruder, durch dessen Düse das so erhaltene Bündel zweier feuerbeständigen Isolierschichten mit dazwischen liegenden Leitern geführt wird. Hierdurch wird die Isolierschicht aufextrudiert. Es folgt ggf. als weitere Station ein Durchgang durch einen weiteren Extruder für den äußeren Mantel. Die letzte Station bildet eine Kabeltrommel, auf die das fertige Kabel aufgewickelt wird.

### Allgemeine Beschreibung des Installationssatzes und der elektrischen Installation sowie deren fakultativen Ausgestaltungen, besonders im Hinblick auf eine Anschlussvorrichtung mit Funktionserhalt

Weitere Ausgestaltungen betreffen einen Installationssatz und eine ausgeführte elektrische Installation mit Funktionserhalt im Brandfall, die außerdem wenigstens eine Anschlussvorrichtung zum abisolierfreien Anzapfen des durchgehenden (also nicht aufzutrennenden) Flachkabels umfassen, welche Funktionserhalt im Brandfall gewährleistet. Die Anschlussvorrichtung umgreift das Flachkabel und weist in das Flachkabel eindrehbare Kontaktschrauben auf, wobei für die Starkstromadern jeweils ein Paar Kontaktschrauben vorgesehen ist. Die beiden Kontaktschrauben eines Paares sind so angeordnet sind, dass bei angeschlossenem Flachkabel eine Kontaktschraube eine Seite des Leiters der Starkstromader und die andere Kontaktschraube die andere Seite der Starkstromader kontaktieren. Die Kontaktschrauben weisen ein Gewinde auf, so dass der Leiter von den beiden Kontaktschrauben mit den Gewinden seitlich eingezwängt wird.

Bei herkömmlichen Anschlussvorrichtungen, z.B. nach Art der in der DE-AS 2 206 187 beschriebenen, erfolgt die Kontaktierung der Starkstromadern jeweils durch eine mit einer Spitze versehenen Kontaktschraube, die über der jeweiligen Ader angeordnet ist und beim Hineinschrauben mit ihrer Spitze zunächst die Aderisolation durchdringt und dann mittig in den Leiter der Ader eindringt und ihn somit kontaktiert. Im Brandfall ist bei einer solchen herkömmlichen Anschlussvorrichtungen jedoch der Erkalt des elektrischen Kontakts zwischen Kontaktschraube und Aderleiter nicht gewährleistet, denn beim Abbrennen der Kabelisolation fehlt dem von der Kontaktschraubenspitze nach unten gedrückten Aderleiter der sonst von der Kabelisolation vermittelte Gegenhalt, so dass zu erwarten ist, dass sich Kontaktschraube und Aderleiter voneinander lösen werden.

Bei der vorliegend beschriebenen Anschlussvorrichtung ist hingegen ein Zusammenhalt von Kontaktschraube und Aderleiter auch dann noch gewährleistet, wenn die gesamte Kabelisolation abgebrannt ist. Dies wird dadurch erzielt, dass für eine Starkstromader jeweils ein Paar Kontaktschrauben vorgesehen ist. Die beiden Kontaktschrauben eines Paares sind dabei so angeordnet, dass eine Kontaktschraube eine Seite des Aderleiters und die andere Kontaktschraube die andere des Aderleiters kontaktiert, so dass sie den Aderleiter zwischen sich einzwängen. Zudem sind die Kontaktschrauben dort, wo sie den Aderleiter kontaktieren, mit einem Gewinde versehen (anders als z.B. bei der DE-AS 2 206 187, bei der die Kontaktschrauben im Kontaktbereich eine glatte Oberfläche haben), so dass sie den Aderleiter von den beiden Seiden mit ihren Gewinden einzwängen. Beim Eindrehen schneiden sich die Gewindekanten der Kontaktschrauben seitlich in den Aderleiter ein und bilden damit eine Art Gegengewinde im Aderleiter aus, in das die Kontaktschraube mit ihrem Gewinde formschlüssig eingreift. Wie üblich bei Schraubgewinden ist die Steigung der Gewinde so klein gewählt, dass Selbsthemmung vorliegt, also z.B. durch Kraftbeaufschlagung in Axialrichtung keine Drehung der Kontaktschraube hervorgerufen werden kann. Durch die Einzwängung des Aderleiters zwischen den beiden Kontaktschrauben und den selbsthemmenden Gewindeeingriff zwischen Kontaktschrauben und Aderleiter ist Funktionserhalt (d.h. der Zusammenhalt von Kontaktschrauben und Aderleiter) wenn die Kabelisolation wegen Abbrands keine Gegenkräfte mehr ausüben kann.

Bei manchen Ausgestaltungen sind die beiden Kontaktschrauben eines Paares auf der gleichen Höhe des durchlaufenden Aderleiters (also auf einer Geraden senkrecht zum Aderleiter) angeordnet. Bei anderen Ausgestaltungen sind sie hingegen zueinander in Kabellängsrichtung versetzt angeordnet. Bei der versetzten Anordnung drücken die beiden Kontaktschrauben den Aderleiter seitlich in entgegengesetzte Richtungen, so dass dieser leicht S-förmig um die Kontaktschrauben verläuft. Er umschlingt so die Kontaktschrauben über einen Teil ihres Umfangs, woraus eine größere Kontaktfläche resultiert. Dies erhöht die Wahrscheinlichkeit des Kontakterhalts im Brandfall, beispielsweise wenn jegliche mechanische Spannung im Aderleiter verloren geht, oder das Kabel Stöße durch herab fallende Gegenstände erleidet.

Bei manchen Ausgestaltungen ist das Gewinde zum seitlichen Kontaktieren der Starkstromader zugleich das Schraubgewinde, das bei der Installation dem Eindrehen der Kontaktschraube dient. Das Gewinde geht also vom Endbereich der Kontaktschraube, dort wo sie den Aderleiter kontaktiert, bis zu deren näher zum Schraubenkopf liegenden Schaftbereich durch. Bei anderen Ausgestaltungen ist das Gewinde zum seitlichen Kontaktieren der Starkstromader ein von jenem Schraubgewinde verschiedenes Gewinde. Beispielsweise kann der Durchmesser des zum Kontaktieren dienenden, im Endbereich liegenden Gewindes kleiner als derjenige des zum Eindrehen dienenden, im Schaftbereich liegenden Gewindes sein. Bei manchen Ausgestaltungen ist die Steigung des zum Kontaktieren dienenden Gewindes größer als diejenige des zum Eindrehen dienenden liegenden Gewindes. Letztere Maßnahme bewirkt, dass beim Eindrehen der Kontaktschrauben der Aderleiter durch den Eingriff des zum Kontaktieren dienenden Gewindes nach oben (d.h. in Richtung Schraubenkopf) gezogen wird. Der Aderleiter kommt wird damit tiefer zwischen die beiden Kontaktschrauben eingezogen, was sich zusätzlich günstig auf den Funktionserhalt auswirkt.

Bei manchen Ausgestaltungen dient als Fassung für die beiden Kontaktschrauben ein Gewindeblock aus Metall, der an der Flachseite des Kabels über der jeweils zu kontaktierenden Ader angeordnet ist. Zur gewindemäßigen Aufnahme der beiden Kontaktschrauben des Paares ist er mit entsprechenden Gegengewinden versehen. Der metallische Gewindeblock dient nicht nur im mechanischen Sinn als Fassung für die Kontaktschrauben, sondern steht durch die Gewindeberührung auch in elektrischem Kontakt mit den Kontaktschrauben und damit dem Aderleiter. Auch wenn im Brandfall alle Isolationen abbrennen, hält der metallische Gewindeblock die beiden Kontaktschrauben in ihrer den Aderleiter einzwängenden Lage und bleibt so in elektrischem Kontakt mit dem Aderleiter.

Grundsätzlich gibt es verschiedene Möglichkeiten zu verhindern, dass ein Gewindeblock im Brandfall durch Kontakt mit einer Nachbarader einen Kurzschluss erzeugt; beispielsweise sind bei manchen Ausgestaltungen hierfür feuerbeständige Distanzhalter zwischen Adern und Gewindeblöcken vorgesehen. Bei manchen Ausgestaltungen ist bereits durch die räumliche Anordnung der Gewindeblöcke die Gefahr einer Berührung des Nachbarleiters ausgeschlossen bzw. so weit verringert, dass von einem derartigen feuerbeständigen Distanzhalter zwischen Adern und Gewindeblöcken abgesehen werden kann. So sind bei manchen Ausgestaltungen die Gewindeblöcke nur über ihrer jeweiligen Starkstromader angeordnet. Anders ausgedrückt erstreckt sich ein Gewindeblock quer zur Kabellängsrichtung nur so weit, dass er nicht in Überdeckung mit dem Leiter einer Nachbarader kommt. Zudem sind bei manchen Ausgestaltungen die Gewindeblöcke zur Vergrößerung ihrer Relativabstände in Kabellängsrichtung gesehen zueinander versetzt angeordnet.

Bei manchen Ausgestaltungen ist für die Gewindeblöcke eine Fassung vorgesehen ist, die aus feuerbeständigem isolierenden Material, wie Glas oder Keramik gefertigt ist. Sie fungiert an den Seiten der Gewindeblöcke sowie der dem Flachkabel abgewandten Oberseite der Gewindeblöcke als isolierender Abstandshalter. Selbst wenn alle Kunststoffisolationen abbrennen, sind somit die Gewindeblöcke in ihrer Relativposition fixiert. Aufgrund der Doppelschraubverbindungen zwischen den Gewindeblöcken und den Adern sind damit auch die Adern in ihrer Relativposition fixiert. Die Distanzhaltung zur Seite und nach oben verhindert zudem eine leitende Berührung mit Gehäuseteilen, oder einem unten näher beschriebenen Metallkäfig. Wie oben bereits erwähnt wurde braucht zum Kabel hin hingegen keine feuerbeständige isolierende Distanzhaltung vorgesehen zu sein, da die Gewindeblöcke ohnehin über die Kontaktschrauben mit dem jeweils zugeordneten Aderleiter leitend verbunden sind, so dass ein Abbrennen der dazwischen liegenden Kabelisolation keine Gefährdung des Funktionserhalts darstellt.

Bei manchen Ausgestaltungen ist die isolierende feuerbeständige Fassung einstückig und weist Nester zur Aufnahme der Gewindeblöcke auf. Grundsätzlich ist auch eine mehrstückige Ausbildung denkbar, wobei die Fassung dann bei der Montage aus den Einzelstücken zusammen gesetzt würde. Die einstückige Ausbildung erlaubt demgegenüber eine schnellere und einfachere Montage, da dann beispielsweise nur noch die Gewindeblöcke in die Fassung eingesetzt werden brauchen. Bei den Nestern handelt es sich um Ausnehmungen für jeweils einen Gewindeblock. Die Nester sind beispielsweise nach unten (d.h. zum Kabel hin) offen, und erlauben so ein Einsetzen eines Gewindeblocks von der Unterseite der Fassung, bevor diese zusammen mit den eingesetzten Gewindeblöcken auf das Kabel gesetzt wird. Zur Oberseite kann die Fassung in den Nestern eine oder mehrere Öffnungen haben, um ein Eindrehen der Kontaktschrauben bei auf Kabel aufgesetzter Fassung zu ermöglichen. "Einstückig" bedeutet nicht etwa, dass die Fassung aus einem Stück gefertigt zu sein braucht. Sie kann vielmehr auch aus mehreren Stücken bestehen, die fest miteinander verbunden, z.B. verklebt sind. Die Eigenschaft der Einstückigkeit braucht aber im Brandfall nicht erhalten bleiben: Wenn z.B. der Kleber im Brandfall verbrennt, wird die Einstückigkeit der Fassung in der Regel verloren gehen; dies ist für den Funktionserhalt aber unbedenklich, wenn die Einstückigkeit in erster Linie der Montageerleichterung dient, die Fassung aber im montierten Zustand der Anschlussvorrichtung z.B. von einem feuerfesten Gehäuse oder Käfig zusammen gehalten wird. Bei manchen Ausgestaltungen ist die Fassung aber aus einem Stück hergestellt, beispielsweise aus einem Glasquader gefräst, oder als entsprechendes Glas- oder Keramikformteil gegossen.

Bei manchen Ausgestaltungen ist ein Metallgehäuse vorgesehen, das wegen der Durchtrittsöffnungen für das Flachkabel und einer ggf. vorhandenen Öffnung z.B. für einen Schraubendreher zum Eindrehen der Kontaktschrauben auch "Metallkäfig" genannt wird. Der Metallkäfig umgreift das Flachkabel und bildet ein Widerlager für die Gewindeblöcke. Beim Eindrehen einer Kontaktschraube in die Isolation des Flachkabels kann nämlich eine Reaktionskraft auftreten, die den Gewindeblock samt einzudrehender Kontaktschraube vom Flachkabel abzuheben trachtet. Zwar ist es angesichts der beidseitigen Gewindeeinzwängung der Aderleiter denkbar, auf ein Widerlager, das diese Abhebung des Gewindeblocks verhindert, zu verzichten. Gleichwohl ist es z.B. für die Montage vorzuziehen, dass ein derartiges Abheben der Gewindeblöcke konstruktiv beispielsweise durch den besagten Metallkäfig verhindert wird. Da der Metallkäfig feuerbeständig ist, bleibt der durch den Metallkäfig bewirkte Zusammenhalt der Einzelteile der Anschlussvorrichtung auch im Brandfall bestehen. Dies wirkt sich günstig für den Funktionserhalt im Brandfall aus.

Bei manchen Ausgestaltungen werden das Flachkabel, die Gewindeblöcke und ggf. die diese aufnehmende isolierende feuerbeständige Fassung bei der Montage in den Metallkäfig eingesetzt oder eingeschoben. Hierfür gibt es verschiedene Ausführungsmöglichkeiten. Beispielsweise kann der Metallkäfig mit einem öffnungsfähigen verschließbaren Deckel ausgerüstet sein. Der Deckel kann z.B. an Scharnieren am übrigen Metallkäfig angelenkt und z.B. mit Hilfe von Schrauben verschließbar sein. Alternativ kann ein Käfig, der nicht mit einem Deckel ausgerüstet ist, außer an den Stirnseiten auch z.B. an der Oberseite offen sein. An der oberen Öffnung ist ein sich nach innen erstreckenden Randflansch ausgebildet. Durch die obere Öffnung ist es möglich, das Flachkabel in den Metallkäfig einzulegen; die isolierende feuerbeständige Fassung mit den Gewindeblöcken kann dann z.B. von einer der Stirnseiten her unter den Randflansch eingeschoben werden. Schließlich kann die ganze Anordnung z.B. mit Hilfe eines Keils verspannt werden, der zwischen die isolierende feuerbeständige Fassung und den Randflansch eingeschoben wird.

Die obige Beschreibung der Funktion des Metallkäfigs als Widerlager für die Metallblöcke ist nicht etwa so zu verstehen, dass sich die Metallblöcke unmittelbar am Metallkäfig abstützen müssten. Vielmehr ist bei manchen Ausgestaltungen die isolierende feuerbeständige Fassung dazwischen angeordnet und verhindert so eine Berührung von Metallkäfig und Gewindeblöcken. Bei diesen Ausgestaltungen bildet der Metallkäfig also unter Zwischenschaltung der isolierenden Fassung das Widerlager für die Gewindeblöcke.

Bei manchen Ausgestaltungen ist an der Unterseite des Flachkabels (d.h. an dessen den Metallblöcken mit den Kontaktschrauben abgewandten Seite) eine Abstandsplatte aus feuerbeständigem isolierenden Material, wie Glas oder Keramik vorgesehen. Diese wird z.B. beim Zusammenbau der Anschlussvorrichtung zwischen Flachkabel und Metallkäfig eingesetzt; alternativ ist auch eine Befestigung der Abstandsplatte (z.B. mittels Klebeverbindung) am Metallkäfig möglich. Auch eine Beschichtung der inneren Oberfläche des Metallkäfigs gegenüber dem Flachkabel mit feuerbeständigem isolierenden Material bildet eine "Abstandsplatte" in diesem Sinn. Die Abstandsplatte vermeidet bei einem Abbrennen der Isolation des Flachkabels, dass die Aderleiter und/oder die ggf. nach unten über die Aderleiter herausstehenden Kontaktschrauben in Kontakt mit dem Metallkäfig kommen können.

Insgesamt lässt sich der Aufbau der Anschlussvorrichtung bei den oben genannten Ausgestaltungen in einem allgemeineren Sinn auch so charakterisieren, dass die Anschlussvorrichtung einerseits aus Metallteilen aufgebaut ist, die ihre mechanische und elektrische Funktion auch unter Feuereinwirkung bewahren, und anderseits aus einem oder mehreren Abstandshalterelementen aus feuerbeständigem isolierenden Material, wie Glas oder Keramik, aufgebaut ist, so dass selbst bei einem Abrennen oder Abschmelzen aller Isolationen des Flachkabels ein elektrischer Kurzschluss zwischen den verschiedenen Starkstromadern ausgeschlossen ist.

Bei manchen Ausgestaltungen ist an den Gewindeblöcken außerdem jeweils eine Anschlussklemme, z.B. in Form einer Schraubklemme, für eine Abzweigader angeordnet. Bei einigen dieser Ausgestaltungen ist die Anschlussklemme z.B. nahe der Flachkabelebene gelegen sein, so dass die Abzweigadern von den mehreren Gewindeblöcken in Gängen geführt werden, die in isolierende feuerbeständige Fassung an deren Unterseite (d.h. an der zum Flachkabel gewandten Seite) eingearbeitet sind. Die Schraube zum Festziehen der Schraubklemme kann hingegen von der Oberseite der isolierenden feuerbeständigen Fassung zugänglich sein. Bei manchen Ausgestaltungen ist an der Abzweigung ein Überstromschutz (d.h. eine "Sicherung") vorgesehen, damit bei einem Kurzschluss in der Abzweigleitung diese von der durch das Flachkabel gebildeten Leitung abgetrennt wird, damit letztere keinen Funktionsverlust erleidet.

Angesichts einer möglichen Installation in feuchter Umgebung (z.B. in Tunnels) und der Beaufschlagung mit Löschwasser sind Ausgestaltungen vorteilhaft, bei denen das Eindringen von Wasser den Kontaktbereich verhindert wird oder zumindest erschwert wird. Zu schützen sind hierbei diejenigen Stellen, an denen die Kontaktschrauben die Isolation des Flachkabels durchdringen. Zu diesem Zweck ist bei manchen Ausgestaltungen zwischen dem Flachkabel und der isolierenden feuerbeständigen Fassung mit den Gewindeblöcken eine Dichtung, z.B. aus Silikongummi vorgesehen. Diese Dichtung wird beim Installationsvorgang nach dem Einlegen des Flachkabels in den Metallkäfig auf das Flachkabel aufgelegt, bevor die isolierende feuerbeständige Fassung - je nach Art des Metallkäfigs - aufgesetzt bzw. eingeschoben wird. Die Dichtung verhindert im installierten Zustand der Anschlussvorrichtung, dass Wasser zwischen Flachkabel und der isolierenden feuerbeständigen Fassung mit den Gewindeblöcken zu denjenigen Stellen vordringen kann, an denen die Kontaktschrauben die Isolation des Flachkabels perforiert haben.

Um die Dichtwirkung zu vergrößern kann man bei manchen Ausgestaltungen die Fassung mit Hilfe des Metallkäfigs mit Kraft beaufschlagen, und damit Druck auf die Dichtung ausüben, so dass diese komprimiert wird. Bei Ausgestaltungen, bei denen der Metallkäfig mit einem Deckel ausgerüstet ist, kann die Kraftbeaufschlagung beispielsweise mit Hilfe des auf die Fassung drückenden Deckels erfolgen, indem dieser mit Schließschrauben in seine geschlossene Stellung gespannt wird. Bei Ausgestaltungen mit einem deckellosen, oben offenen Käfig Randflansch erfolgt die Kraftbeaufschlagung z.B. durch Verspannen mit einem Keil, indem dieser zwischen die isolierende feuerbeständige Fassung und den Randflansch eingeschoben wird.

### Allgemeine Beschreibung der Flachkabelführung

Ein weiterer Aspekt betrifft schließlich eine Flachkabelführung mit Funktionserhalt bei Brand, die wenigstens einen Träger für ein Flachkabel und eine Aufnahme aus feuerbeständigem isolierenden Material, wie Glas oder Keramik umfasst. Die Aufnahme ist auf dem Träger angeordnet, und ist so ausgebildet, dass das Flachkabel mit horizontal orientierter Querrichtung in sie eingelegt werden kann.

Die Aufnahme hat z.B. hochgezogene Ränder, damit das Flachkabel nicht herausfallen kann. Bei manchen Ausgestaltungen verengt sich die Aufnahme zur oberen Öffnung, um einen noch besseren Schutz gegen Herausfallen des Kabels zu bieten.

Aufgrund der eingangs genannten besonders günstigen Eigenschaften von Flachkabeln hinsichtlich der nicht überkreuzenden Leiter und der Abwesenheit innerer Spannungen werden nach Abbrand der Kabelisolation die Flachkabeladern beabstandet in der isolierenden feuerfesten Aufnahmen liegen. Grundsätzlich ist es daher möglich, mit einer derartigen Kabelführung Funktionserhalt unter Verwendung eines herkömmlichen, nicht besonders für Funktionserhalt ausgerüsteten Flachkabels, z.B. nach Art des DE-AS 2 206 187 beschriebenen, zu erzielen.

Vorteilhafterweise verwendet man die Flachkabelführung in Installationssätzen und die ausgeführten elektrischen Installationen jedoch ein für Funktionserhalt besonders ausgerüstetes Flachkabel der hier beschrieben Art, also ein Flachkabel, bei dem zwischen den Starkstromadern ein feuerbeständiges Isoliermaterial angeordnet ist. Dieses Isoliermaterial verhindert, dass sich die Leiter der Starkstromadern beispielsweise bei mechanischer Stoßbeaufschlagung berühren können.

### Erläuterung der Zeichnung

Die angefügte Zeichnung veranschaulicht Ausfuhrungsfonnen der verschiedenen Aspekte der Erfindung. In der Zeichnung zeigen:
Fig. 1 eine perspektivische Ansicht eines stufenweise aufgeschnittenen Flachkabels mit Funktionserhalt im Brandfall gemäß einer ersten Ausführungsform mit stegartig zwischen den Adern angeordnetem feuerbeständigen Isoliermaterial;
Fig. 2 eine Schnittansicht eines Flachkabels gemäß einer zweiten Ausführungsform mit zwischen den Adern in Längsrichtung verlaufenden Seilen aus feuerbeständigen Isoliermaterial;
Fig. 3 einen Querschnitt einer Flachkabel-Anschlussvorrichtung mit Funktionserhalt im Brandfall;
Fig. 4 eine Seitenansicht mit zwei verschiedenen Ausführungsformen von Kontaktschrauben:
Fig. 5 eine Draufsicht eines Ausschnitts der in Fig. 3 im Schnitt dargestellten einer Flachkabel-Anschlussvorrichtung;
Fig. 6 eine perspektivische Ansicht einer Ausführungsform einer einstückigen Gewindeblock-Fassung;
Fig. 7 eine perspektivische Ansicht der inneren Teile der Ausführungsform von Fig. 6, mit Ansicht der einstückigen Gewindeblock-Fassung von schräg unten; Gewindeblock-Fassung;
Fig. 8 ein Längsschnitt einer Ausführungsform einer Anschlussvorrichtung mit einem schwenkbaren Spanndeckel;
Fig. 9 eine schematische Draufsicht der Orientierung einer Flachkabel-Umlenkvorrichtung und des Kabelverlaufs bei Kabelumlenkung parallel zur Flachkabelebene;
Fig. 10 a und b schematische Darstellungen des Umlenk- und des Umschlingungswinkels bei der Kabelumlenkung von Fig. 9, wobei Fig. 10b die Ansicht von Fig. 9 aus der Richtung Xb darstellt;
Fig. 11 eine perspektivische Ansicht einer Flachkabel-Umlenkvorrichtung;
Fig. 12 ein Querschnitt der Flachkabel-Umlenkvorrichtung von Fig. 11 durch dessen Mittelebene;
Fig. 13a bis c schematische Darstellungen der Umlenk- und des Umschlingungswinkel bei einer Kabelumlenkung aus der Flachkabelebene heraus;
Fig. 14 eine Seitenansicht eines Kabelträgers;
Fig. 15 eine perspektivische Ansicht des Kabelträgers von Fig. 14;
Fig. 16 eine schematische Darstellung eines Installationssatzes;
Fig. 17 eine schematische Darstellung einer ausgeführten elektrischen Installation.

### Beschreibung von Ausführungsformen anhand der Zeichnung

Die in der vorliegenden Beschreibung verwendeten Begriffe "Kabellängsrichtung" und "Kabelquerrichtung" sind in den Figuren durch die Richtungspfeile "L" bzw. "Q" veranschaulicht.

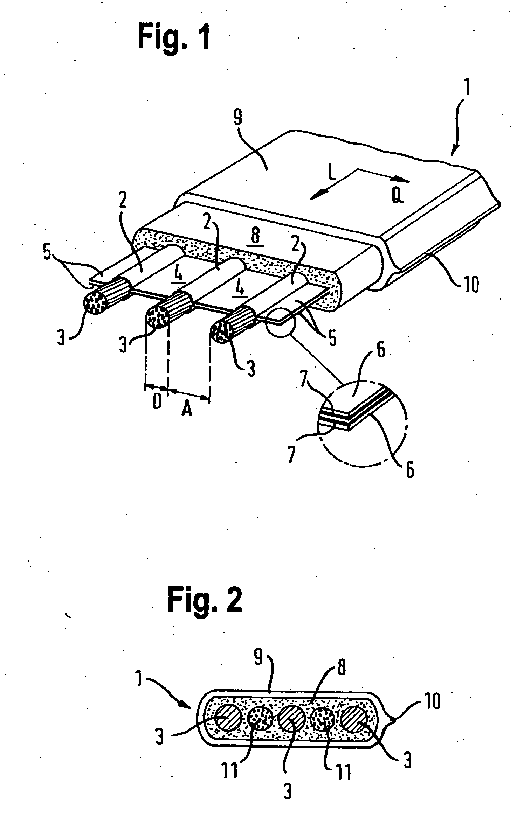

Das in Figur 1 beispielhaft dargestellte Flachkabel 1 ist für einphasigen Wechselstrom bestimmt, und weist dementsprechend drei Starkstromadern 2 auf (Phasenleiter, Erde und Schutzleiter). Jede dieser Starkstromadern 2 wird durch einen Aderleiter 3 gebildet, der direkt - d.h. ohne die sonst übliche, im Querschnitt ringförmige Aderisolierung von einer feuerbeständigen Isolierschicht umfasst ist, wie noch näher ausgeführt wird. Die Aderleiter 3 verlaufen mit Abstand parallel nebeneinander in einer Ebene, und zwar der Mittelebene des Flachkabels 1. Der Abstand A zwischen zwei Aderleitern 3 beträgt in Figur 1 das Zweifache des Durchmessers D der Aderleiter 3. Bei anderen Ausführungsformen ist das Verhältnis A/D größer, z.B. 2,5 . und 3.

In der Mittelebene zwischen den Aderleitern 3 ist stegartig feuerbeständiges Isoliermaterial 4 angeordnet. Es wird durch zwei feuerbeständige Isolierschichten 5 gebildet, von denen eine die in Figur 1 liegende untere Hälfte der Aderleiter 3 und die andere die jeweils obere Hälfe der Aderleiter 3 im Querschnitt halbkreisförmig umschließen. Die feuerbeständigen Isolierschichten 5 liegen dabei - wie bereits oben ausgeführt wurde - direkt auf der metallischen Oberfläche der Aderleiter 3 auf, ohne Zwischenschaltung einer brennbaren Aderisolation. Zwischen den Aderleitern 3 sind die feuerbeständigen Isolierschichten 5 in der Mittelebene des Flachkabels 1 miteinander verklebt. Die beiden Isolierschichten 5 bilden somit zusammen feuerbeständige Stege zwischen den Aderleitern 3, welche diese auch bei einem vollständigen Abbrennen der (im Folgenden beschriebenen) Kabelisolation auf Distanz halten und somit die Gefahr einen Kurzschlusses verringern. Die vollständige Umhüllung der Aderleiter 3 durch die beiden feuerbeständigen Isolierschichten 5 bleibt im Brandfall ebenfalls bestehen und dient somit der Kurzschlussvermeidung, falls es zur Berührung mit einem äußeren leiterfähigen Bauteil oder - trotz der genannten Stege - zu einer Berührung zweier Aderleiter 3 kommen sollte.

Die feuerbeständigen Isolierschichten 5 sind jeweils aus einem feuerbeständigen Trägerband 6, hier einem Glasgewebeband und einer darauf aufgeklebten Glimmerschicht 7 aufgebaut. Bei dem in Figur 1 dargestellten Ausführungsbeispiel sind die beiden feuerbeständigen Isolierschichten 5 so orientiert, dass beide Glimmerschichten 7 zur Kabelseele weisen, also an den Aderleitern 3 anliegen und zwischen den Aderleitern in der Mittelebene miteinander verklebt sind. Die Trägerbänder 6 weisen also nach außen.

Das durch die Aderleiter 3 und die feuerbeständigen Isolierschichten 5 gebildete Paket ist in einer Isolierhülle 8 vollständig eingebettet, welche dem Kabelkabel 1 im Nicht-Brandfall mechanische Stabilität verleiht. Die Isolierhülle 5 ist im Wesentlichen aus einem brennbaren Kunststoffmaterial gefertigt, ist jedoch mit Mineralien (z.B. Kaolin) versetzt, die im Brandfall keramisieren. Die Isolierhülle 8 bildet so im Brandfall eine Kruste aus, die dem aus Aderleitern 3 und feuerbeständigen Isolierschichten 5 gebildeten Paket eine gewisse zusätzliche mechanische Stabilität und zusätzlichen Schutz vor Kurzschlussberührungen bietet.

Die Isolierhülle 8 ist außen wiederum von einem Kabelmantel 9 umgeben, welcher die Außenkontur des Flachkabels 1 definiert. Er ist aus brennbarem Kunststoff gefertigt und brennt somit im Brandfall ab. Im Nicht-Brandfall definiert er jedoch die Außenkontur des Flachkabels 1. Und zwar ist er z.B. an einer der Schmalseiten des Flachkabels 1 mit einer Indexnase 10 ausgerüstet, welche die ansonsten gegebene 180°-Symmetrie des Flachkabels 1 gegenüber Drehung um die Längsachse L aufhebt. Hierdurch kann sichergestellt werden, dass das Flachkabel 1 nur mit der richtigen Orientierung in eine komplementär geformte Anschlussvorrichtung eingelegt werden kann, aber nicht etwa mit der Unterseite nach oben. Der Kabelmantel 9 ist ggf. aus einem speziellen Kunststoff gefertigt, der dem Flachkabel 1 Beständigkeit gegen aggressive Substanzen verleiht. Er ist auch der Träger für farbige Markierungen, Beschriftungen, usw.

Figur 2 zeigt eine andere Ausführungsform, bei der statt dem stegartigen Isoliermaterial zwischen den Aderleitern 3 längs verlaufende Seile 11 aus feuerbeständigem Isoliermaterial, hier z.B. aus Glasfasern angeordnet sind. Bei der dargestellten Ausführungsform sind die Aderleiter 3 und die Seile 11 direkt in die Isolierhülle eingebettet. Bei anderen Ausführungsformen sind sie hingegen gemeinsam von einer feuerbeständigen Isolierschicht umgeben, auf der erst die Isolierhülle aufgebracht ist. Hinsichtlich der anderen Eigenschaften der Figur 2, z.B. hinsichtlich des Materials der Isolierhülle 8 usw. wird auf die obigen Ausführungsformen zur Figur 1 verwiesen, die auch für die Figur 2 gelten.

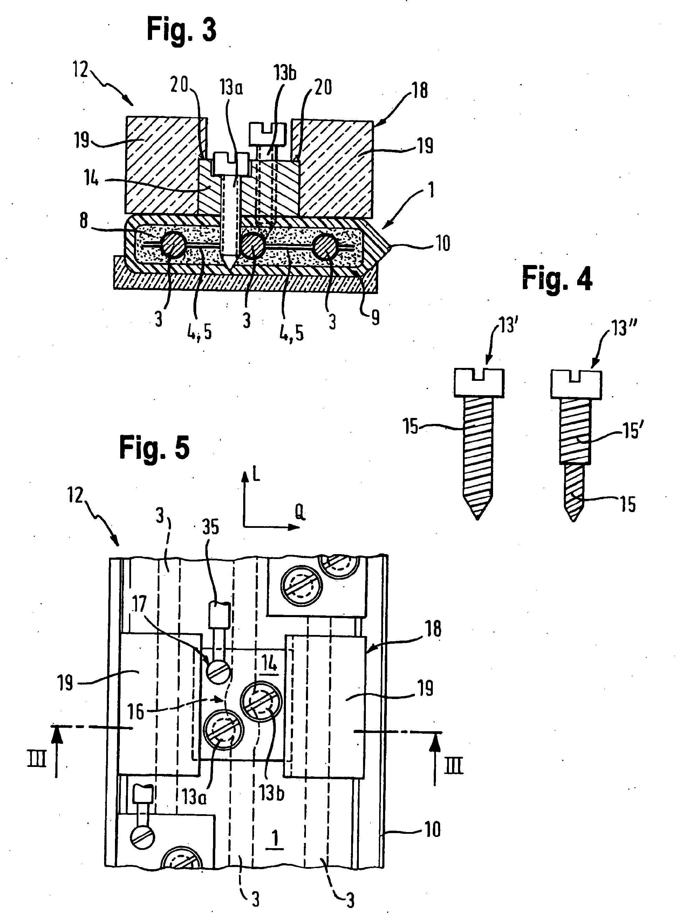

Ausführungsformen einer Anschlussvorrichtung mit Funktionserhalt im Brandfall werden nun anhand der Figuren 3 bis 8 näher beschrieben.

Die Anschlussvorrichtung 12 ist dazu geeignet, beispielsweise einen Abzweigleiter an ein durchlaufendes Flachkabel 1 anzuschließen, ohne dass dieses abisoliert oder gar aufgetrennt werden müsste. Es handelt sich vielmehr um eine Anzapfkontaktierung, bei der die Anschlussvorrichtung 12 an beliebiger Stelle des Flachkabels 1 angesetzt und elektrischer Kontakt zu den Aderleitern 3 durch Durchdringung der Kabelisolation (Isolierhülle 8 und Kabelmantel 9) und ggf. der feuerbeständigen Isolierschicht 5 durch Kontaktelemente hergestellt werden. Bei den Kontaktelementen handelt es sich um ein Paar Kontaktschrauben 13a, 13b für jede Starkstromader 2. Die Kontaktschrauben 13a, 13b sind in einem Gewindeblock 14 über der einen bzw. anderen Seite des zugehörigen Aderleiters 3 angeordnet, und kontaktieren im installierten (= eingedrehten) Zustand die eine bzw. andere Seite des Aderleiters 3. Sie zwängen dabei mit ihren Gewinde 15 den Aderleiter 3 von beiden Seiten ein. In Figur 3 ist eine der Kontaktschrauben, nämlich 13a, bereits vollständig eingedreht dargestellt, während die andere Kontaktschraube 13b nur teilweise eingedreht dargestellt ist.

Figur 4 veranschaulicht zwei verschiedene Ausführungsformen von Kontaktschrauben. Bei der ersten Ausführungsform 13' erstreckt sich das Gewinde 15 im Wesentlichen über die gesamte Länge des Schraubenschafts. Im Gewindeblock 14 findet sich ein entsprechendes Gegengewinde für jede Kontaktschraube 13'. Das Gewinde 13' dient bei dieser Ausführungsform somit nicht nur dem besseren Kontaktieren des Aderleiters 3, sondern auch dem Eindrehen der Kontaktschraube 13' in das Flachkabel 1.

Bei der anderen Ausführungsform 13" findet sich das zum Kontaktieren des Flachkabels 1 dienende Gewinde 15 nur in der Nähe der Schraubenspitze. Ein zweites, hiervon unterschiedliches Gewinde 15' ist näher zum Schraubenkopf angeordnet, greift in das Gegengewinde im Gewindeblock 14 ein, und dient somit dem Eindrehen der Kontaktschraube 13" in das Flachkabel 1. Bei der in Figur 4 dargestellten zweiten Ausführungsform hat das kontaktherstellende Gewinde 15 einen kleineren Durchmesser und eine größere Steigung als das dem Eindrehen dienende Gewinde 15'.

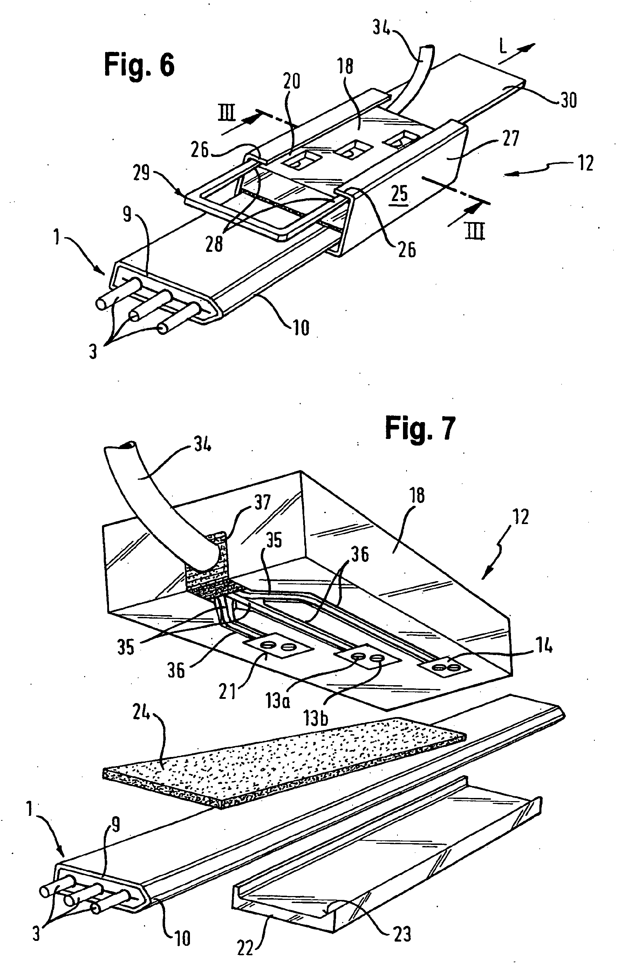

Wie aus den Figuren 5 und 7 hervorgeht, sind die beiden Kontaktschrauben 13a, 13b eines Paares bezüglich der Kabellängsrichtung L versetzt im Gewindeblock 14 angeordnet. Dies ruft eine leicht S-förmige Umschlingung der Kontaktschrauben 13a, 13b durch den Aderleiter 3 hervor, die in Figur 5 mit 16 gekennzeichnet ist.

Die Gewindeblöcke 14 weisen außerdem jeweils eine Anschlussklemme 17 auf, hier in Form einer Schraubklemme. Diese dient dem Anschluss einer Abzweigader, die in unten näher beschriebener Weise aus der Anschlussvorrichtung 12 herausgeführt ist. Indem die Gewindeblöcke 14 aus einem leitenden feuerbeständigen Material, d.h. hier einem Metall wie z.B. Messing gefertigt sind, stellen sie eine elektrisch leitende Verbindung von dem jeweils zugehörigen Aderleiter 3 über die beiden Kontaktschrauben 13a, 13b und die Anschlussklemme 17 zu der Abzweigader, die beim Abbrand sämtlicher Isolationen bestehen bleibt, also Funktionserhalt bei Brand gewährleistet.

Wie Figur 5 veranschaulicht, erstrecken sich die Gewindeblöcke in der Kabelquerrichtung Q nur in einem Umgebungsbereich über dem zugeordneten Aderleiter 3, aber nicht bis zu einem benachbarten Aderleiter 3. Es gibt also keine Überdeckung des Aderleiters 3 einer Nachbarader 2. Zudem sind die Gewindeblöcke 14 auch in der Längsrichtung L versetzt angeordnet, was gegenüber einer ebenfalls möglichen nicht längs versetzten Anordnung größere Abstände zwischen den Gewindeblöcken 14 ermöglicht.

Um die Gewindeblöcke 14 untereinander und gegenüber einem (unten näher beschriebenen) Metallgehäuse auf Abstand zu halten und außerdem auf das Flachkabel 1 zu drücken, ist eine Fassung 18 aus feuerbeständigem isolierendem Material, hier aus Glas, vorgesehen. Bei der Ausführungsform von Figur 5 besteht diese Fassung aus einzelnen Glasblöcken 19 (wobei in Figur 5 nur diejenigen Glasblöcke 19 gezeichnet sind, die dem mittleren Gewindeblock 14 zugeordnet sind), während die Fassung 18 bei der Ausführungsform der Figuren 6 und 7 einstückig ist, beispielsweise aus einem Glasblock gefräst ist. Die Querschnittsdarstellung der Figur 3 zeigt gleichermaßen beide Ausführungsformen, da sich diese in der Schnittachse (gekennzeichnet mit "III" in den Figuren 5 und 6) nicht unterscheiden.

Wie aus Figur 3 hervorgeht, umschließt die Fassung 18 die Gewindeblöcke 14 seitlich, und erstreckt sich in der senkrecht vom Kabel wegführenden Richtung (d.h. der Richtung nach oben in Figur 3) über die Gewindeblöcke 14 samt Schraubenköpfen hinaus. Sie umgreift die Gewindeblöcke 14 an deren oberen Rand mit Flanschen 20, welche die Funktion haben, bei Kraftausübung auf die Fassung 18 die Gewindeblöcke 14 auf das Flachkabel 1 zu drücken. Sie bilden daher Niederhalteflansch für die Fassung 18. Über jedem Gewindeblock 14 lässt die Fassung 18 eine Öffnung frei, die Zugriff auf die Schraubenköpfe der Kontaktschrauben 13a, 13b und der Anschlussklemme 17 lässt, um z.B. ein Eindrehen dieser Schrauben zu erlauben.

Bei der Ausführungsform mit einstückiger Fassung 18 sind an deren zum Flachkabel 1 zugewandten Seite Nester 21 zur Aufnahme der Gewindeblöcke 14 eingearbeitet, deren Innenkontur im Wesentlichen komplementär zur Außenkontur der Gewindeblöcke 14 ausgebildet ist (siehe Figur 7). Die Fassung 18 und die Gewindeblöcke 14 schließen zum Flachkabel 1 hin bündig ab, d.h. sie liegen in einer gemeinsamen Ebene.

Die Anschlussvorrichtung 12 ist im montierten Zustand im Inneren sandwichartig aus mehreren Schichten aufgebaut. Dieser Schichtenaufbau ist in der aufgelösten Darstellung der Figur 7 veranschaulicht. Auf der den Kontaktschrauben 13a, 13b abgewandten Seite des Flachkabels 1 (d.h. unten in Figur 7) ist zunächst eine Abstandsplatte 22 vorgesehen, die aus feuerbeständigem isolierendem Material, hier Glas, gefertigt ist. Die Abstandsplatte 22 weist an einer ihrer Längsseiten eine Indexschräge 23 auf, welche zur Indexnase 10 am Flachkabel 1 komplementär geformt ist und es nur erlaubt, das Flachkabel 1 in der Orientierung mit Indexnase 10 gegen Indexschräge 23 einzulegen und kontaktieren, nicht jedoch in der um 180° gedrehten Orientierung. Auf der Abstandsplatte 22 liegt das Flachkabel 1. Auf dem Flachkabel 1 ist wiederum eine flächige Dichtung 24 angeordnet. Diese hat z.B. die Form einer rechteckigen dünnen Platte gleichmäßiger Dicke. Sie ist aus einem elastischen, nicht feuerbeständigen Material, wie z.B. Silikonkautschuk gefertigt. Auf der Dichtung 24 sitzen wiederum die Fassung 18 und die Gewindeblöcke 14 auf, wobei letztere bei der Ausführungsform mit einstückiger Fassung 18 in die Nester 21 eingesetzt sind.

Dieser schichtenmäßige Aufbau wird von einem feuerbeständigem Gehäuse, hier ein Metallkäfig 25, zusammengehalten. Bei der in Figur 6 dargestellten Ausführungsform ist der Metallkäfig nur dreiseitig geschlossen; an den beiden Stirnseiten ist er offen. Auch die Oberseite des Metallkäfigs 25 ist offen, allerdings nur bis auf Randflansche 26, welche von den in Längsrichtung verlaufenden Seitenwänden 27 des Metallkäfigs 25 nach innen gerichtet sind. Die Montage der Anschlussvorrichtung 12 erfolgt bei der Ausführungsform gemäß Figur 6 folgendermaßen: Zunächst wird die Abstandsplatte 22 auf den Boden des Metallkäfigs 25 gelegt (bei manchen Ausführungsformen ist sie dort bereits vormontiert, z.B. geklebt). Auf der Abstandsplatte 22 wird das Flachkabel 1 angeordnet, z.B. indem es diagonal durch die obere Öffnung des Metallkäfigs 25 geführt wird. Hierauf wiederum wird die Dichtung 24 gesetzt. Auf der Dichtung 24 wird die Fassung 18 mit bereits eingesetzten und hinsichtlich der Abzweigleitung verdrahteten Gewindeblöcke 14 angeordnet. Letzteres erfolgt, indem die Fassung 18 in der Längsrichtung L durch eine der offenen Stirnseiten des Metallkäfigs 25 unter die Randflansche 26 geschoben wird. Die Randflansche 26 lassen dabei ausreichend Luft, um ein derartiges Verschieben der Fassung 18 auf der Dichtung 24 zu ermöglichen. Um im zusammen gebauten Zustand Verschiebungen des schichtartigen Aufbaus auszuschließen und die Dichtung 24 zu komprimieren, wird schließlich zwischen die Oberseite der Fassung 18 und die beiden Randflansche 26 jeweils ein Keil 28 in Kabellängsrichtung L eingeschoben. Bei der Ausführungsform der Figur 6 sind die beiden Keile 28 zu einem einstückigen U-förmigen Keilelement 29 zusammengefasst. Die beiden freien Schenkel dieses Keilelements 29 bilden die zu den freien Enden hin dünner werdenden Keile 28; der mittige Verbindungsschenkel hat hingegen keine Keilfunktion, sondern dient nur der mechanischen Verbindung der beiden Keile 28. Der Keilwinkel der Keile 28 ist so gering, dass Selbsthemmung vorliegt, also der einmal eingeschobene Keil 28 nicht durch die Reaktionskraft der komprimierten Dichtung 24 wieder in Kabellängsrichtung L hinausgedrückt werden kann. Eine Abschlussplatte 30 kann unter die Randflansche 26 innerhalb der Keile 28 eingeschoben werden. Diese bietet Berührschutz gegenüber den ggf. spannungsführenden Köpfen der Kontaktschrauben 13a, 13b. Die Abschlussplatte 30 braucht nicht aus feuerbeständigem Material gefertigt zu sein, da i.a. im Brandfall kein Berührschutz erforderlich ist.

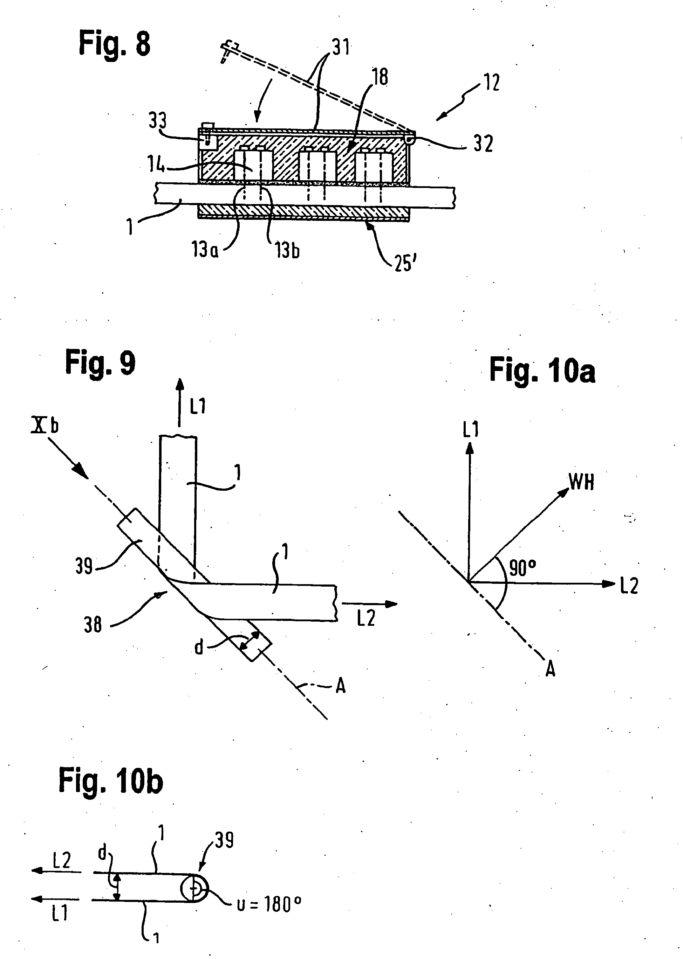

Eine andere Ausführungsform des Metallkäfigs ist in Figur 8 veranschaulicht, dort mit 25' bezeichnet. Statt der Randflansche ist dort ein öffnungsfähiger Deckel 31 vorgesehen, der über ein Scharnier 32 z.B. an einer der Stirnseiten des Metallkäfigs 25' angelenkt ist. Mit Hilfe eines Schraubverschlusses 33 kann der Deckel 31 geschlossen und in der geschlossenen Position gesperrt werden. Der Deckel 31 drückt dabei auf die Oberseite der Fassung 18, so dass diese beim Spannen des Schraubverschlusses 33 auf die Dichtung 24 drückt und diese komprimiert.

Einzelheiten der Abzweigleitung 34 sind in Figur 7 dargestellt. Wie oben ausgeführt wurde, handelt es sich bei der Abzweigleitung 34 beispielsweise um ein herkömmliches brandgeschütztes Rundkabel mit verdrillten Adern. Kurzschlüsse zwischen den Adern werden hier beispielsweise durch spezielle feuerbeständige Aderisolierungen vermieden. Die Abzweigleitung 34 ist innerhalb der Anschlussvorrichtung 12 in einzelne Adern 35, genannt "Abzweigadern" aufgefächert. Hierfür sind Gänge 36 in die den Flachkabel 1 zugewandte Seite der Fassung 18 eingearbeitet. Die Gänge 36 verlaufen über den jeweils darunterliegenden Aderleitern 3, so dass hier eine etwaige Leiterberührung unschädlich wäre. Die Abzweigadern 35 werden nur im Endbereich zusammengeführt. Kurzschlüsse in diesem Endbereich sind durch die genannte feuerfeste Ausbildung der Aderisolierungen der Abzweigadern 35 ausgeschlossen. Bei manchen Ausführungsformen kann zudem die Unterseite der Fassung 18 ganz oder teilweise durch eine feuerfeste isolierende Platte abgedeckt. Die Abzweigleitung 34 ist mit einer Zugentlastung 37 an der Fassung 18 ausgerüstet. Bei manchen Ausführungsformen ist in der Fassung 18 zudem eine Überstromsicherung integriert, damit ein Kurzschluss in der Abzweigleitung 34 nicht zum Funktionsverlust der gesamten, durch das Flachkabel 1 gebildeten Leitung führt.

Ausführungsformen einer Flachkabel-Umlenkvorrichtung 38 mit Funktionserhalt bei Brand werden nun anhand der Figuren 8-13 näher beschrieben. Dabei zeigen die Figuren 9 und 10 schematisch den Kabelverlauf sowie den Umlenk- und Umschlingungswinkel bei einer Umlenkung mit Richtungswechsel ohne Neigungsänderung.

Bei dem in den Figuren 9 und 10 dargestellten Beispiel beträgt die Richtungsänderung des Flachkabels 1 90°. Das Flachkabel 1 trifft schräg unter einem Winkel, der der Hälfte des Umlenkwinkels entspricht (also hier 45° beträgt) auf einen zylindrischen Kabelumlenkkörper 38, dessen Achse mit A bezeichnet. Die Achse A liegt parallel zu der vom Flachkabel 1 aufgespannten Ebene. Das Flachkabel 1 umschlingt den zylindrischen Kabelumlenkkörper 38 über dessen halben Umfang auf dessen Hinterseite, und verlässt diesen wiederum unter einem Winkel, welcher dem halben Umlenkungswinkel entspricht (also hier unter 45° zur Achse A). Wie Figur 10a veranschaulicht, ist die Achse A senkrecht zur Winkelhalbierenden WH zwischen den beiden Kabellängsrichtungen L1, L2 vor und nach der Umlenkung orientiert. Die Kabelquerrichtung Q verläuft vor und nach der Umlenkvorrichtung 38 horizontal, so dass die Aderleiter 3 bei einem Abbrennen der Kabelisolation 8, 9 nicht aufeinander zu liegen kommen. Figur 10b veranschaulicht, dass die Neigung des Flachkabels 1 durch die Umlenkung unberührt bleibt, d.h. die Kabellängsrichtungen L1 und L2 liegen beide parallel zu der vom Flachkabel 1 (vor oder hinter der Umlenkung) aufgespannten Ebene. Bei dieser Umlenkung ohne Neigungsänderung umschlingt das Flachkabel 1 den halben Umfang des zylindrischen Kabelumlenkkörpers; also beträgt der in Figur 10b mit "u" bezeichnete Umschlingungswinkel 180°. Das Flachkabel 1 erfährt in Folge der Umlenkung einen Höhenversatz, der dem Durchmesser d des zylindrischen Kabelumlenkkörpers 38 entspricht.

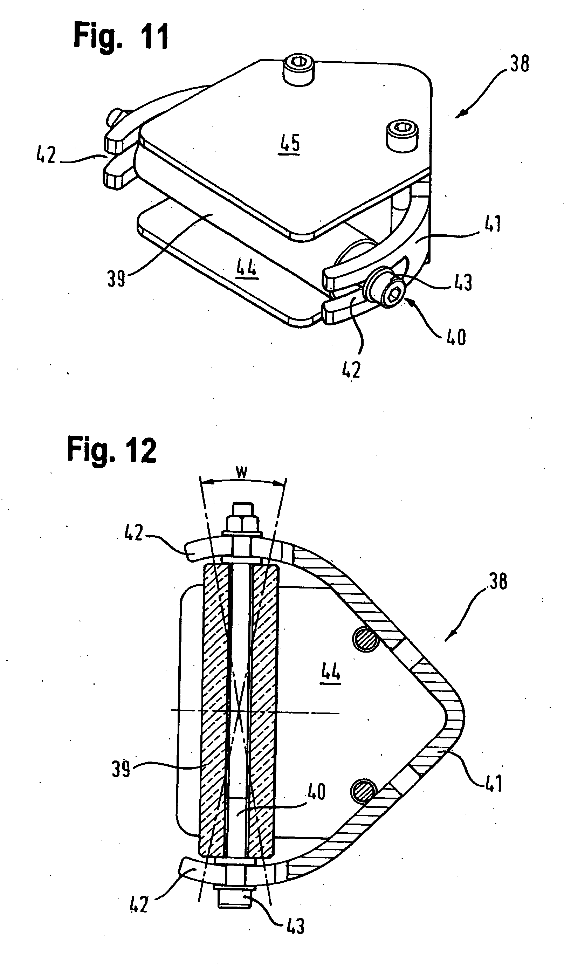

Die Figuren 11 und 12 zeigen die bauliche Gestaltung einer Ausführungsform einer Flachkabel-Umlenkvorrichtung 38. Der zylindrische Kabelumlenkkörper 39 ist ein Zylinder aus feuerbeständigem isolierendem Material, hier Glas, der auf einer metallischen Achse 40 sitzt. Über den Kabelumlenkkörper 39 herausragende Enden der Achse 40 sind in einer gabelartigen Halterung 41 gelagert. Die Halterung 41 ist so von dem zylindrische Kabelumlenkkörper 39 beabstandet, dass sie dessen Umschlingung mit dem Flachkabel 1 ohne Kabelberührung erlaubt. Die Halterung 41 ist an beiden Gabelenden mit Langlöchern 42 versehen, die es ermöglichen, die Achse 40 mit dem Kabelumlenkkörper 39 in verschiedenen Winkelpositionen relativ zur Halterung 41 anzuordnen und mit Hilfe von Achsbefestigungsschrauben 43 zu fixieren. Der Winkelbereich w der möglichen Einstellwinkel ist in Figur 12 veranschaulicht. Bei der dargestellten Ausführungsform sind zudem eine Bodenplatte 44 und eine Abdeckplatte 45 vorgesehen, die sich bis über den Umlenkkörper 39 erstrecken. Die Boden- und Abdeckplatte 44, 45 verlaufen parallel zueinander und lassen zum Kabelumlenkkörper 49 jeweils nur einen relativ schmalen Spalt frei; somit ist diese Ausführungsform für die im Zusammenhang mit den Figuren 9 und 10 beschriebene Kabelumlenkung mit gleichbleibender Neigung des Flachkabels geeignet ist, nicht aber für die nachfolgend beschriebene Variante einer Umlenkung mit Neigungsänderung, für welche die Abdeckplatte 45 zu entfernen ist.

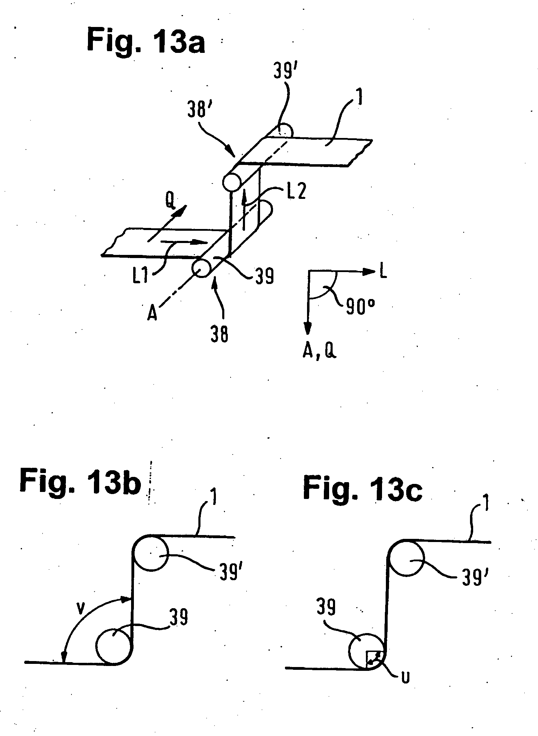

Diese andere Art von Umlenkung mit Neigungsänderung veranschaulicht die Figur 13. Es handelt sich um eine Umlenkung, bei welcher die vom Flachkabel 1 jeweils vor und nach der Umlenkung aufgespannten Ebenen nicht parallel zueinander sind. Dennoch verläuft auch hier die Kabelquerrichtung Q vor und nach der Umlenkvorrichtung 38 horizontal, so dass die Aderleiter 3 bei einem Abbrennen der Kabelisolation 8, 9 nicht aufeinander zu liegen kommen. Bei dem in Figur 13 gezeigten Beispiel kommen zwei Umlenkvorrichtung mit jeweils einem zylindrischen Kabelumlenkkörper 39 zur Anwendung, um einen Höhenversatz eines horizontal oder geneigt verlaufenden Flachkabels 1 zu realisieren. Zunächst wird das Flachkabel 1 um den ersten Kabelumlenkkörper 39 um 90° aus der ursprünglichen Kabelebene abgelenkt, um durch den zweiten Kabelumlenkkörper 39' um den gleichen Winkel zurückgelenkt zu werden. Bei dieser Ausführungsform ist die Achse A des zylindrischen Kabelumlenkkörpers 39, 39' parallel zur Kabelquerrichtung Q, und damit im rechten Winkel zur Kabellängsrichtung L orientiert (Figur 13a). Der Umschlingungswinkel u (Figur 13c) ist bei dieser Art von Ablenkung gleich dem Ablenkwinkel v (Figur 13b).

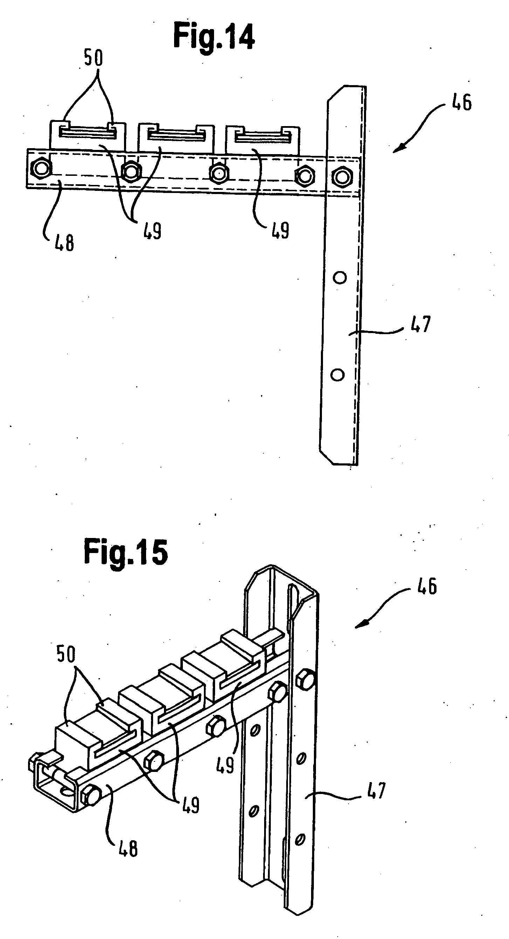

Die Figuren 14 und 15 veranschaulichen eine Ausführungsform eines Trägers 46, der Teil einer Flachkabelführung (beispielsweise entlang einer Tunnelwand) sein kann. Der Träger 46 hat eine Befestigungsschiene 47, die an eine Wand (z.B. eine Tunnelwand) montiert werden kann. Befestigungsschiene 47 hält einen Tragarm 48, auf dem ein oder mehrere Flachkabelaufnahmen 49 angeordnet sind. Die Befestigungsschiene 47 und der Tragarm 48 sind aus Metall gefertigt, während die Flachkabelaufnahmen 49 aus feuerbeständigem isolierendem Material, hier Glas, gefertigt sind. Die Flachkabelaufnahme 49 hat hochgezogene Ränder 50, die sich zur oberen Öffnung der Kabelaufnahme 49 hin verengen, und so ein Herausfallen des eingelegten Flachkabels 1 verhindern.

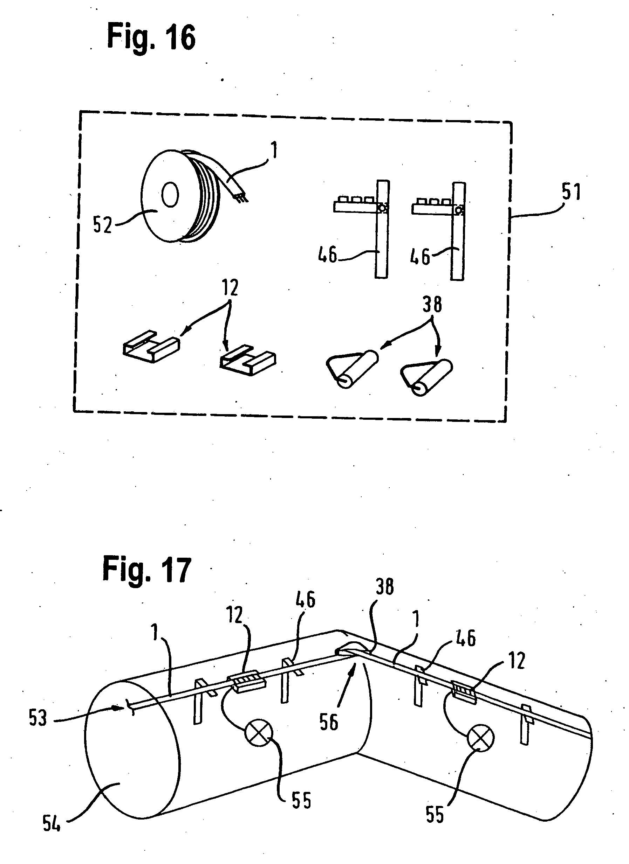

Figur 16 veranschaulicht schematisch eine Ausführungsform eines Installationssatzes 51 für eine elektrische Installation mit Funktionserhalt im Brandfall. Bei einem solchen Installationssatz handelt es sich um eine Zusammenstellung verschiedener Teile zum Aufbau einer Installation mit Funktionserhalt im Brandfall, die hinsichtlich Funktion, Materialauswahl und Abmessungen so aufeinander abgestimmt sind, dass sie eine Verstellung einer Installation der genannten Art ermöglichen. Ein derartiger Satz von Teilen wird beispielsweise auf einer Baustelle vorhanden sein, bevor mit der eigentlichen Installationsarbeit begonnen werden kann.

Das in Figur 16 gezeigte Beispiel umfasst eine Kabeltrommel 52 mit einem aufgewickelten Flachkabel 1, wie es beispielsweise im Zusammenhang mit den Figuren 1 und 2 beschrieben wurde. Es umfasst ferner mehrere Anschlussvorrichtungen 12, Flachkabel-Umlenkvorrichtungen 38 und Tragarme 48, wie sie oben im Zusammenhang mit den Figuren 3-14 beschrieben wurden. Die Darstellung ist nur beispielhaft, beispielsweise können von einzelnen Teilen größere oder kleinere Stückzahlen versehen sein, oder manche Teile ganz fehlen.

Figur 17 veranschaulicht schließlich eine ausgeführte elektrische Installation 53, die am Beispiel eines Tunnels 54 gezeigt ist. Ein Flachkabel 1 der anhand der Figuren 1 und 2 beschriebenen Art verläuft gestützt auf Tragarme 48 längs des Tunnels 54 unter der Tunneldecke. Anschlussvorrichtungen 12 sind vorgesehen, um über Abzweigleitungen 34 elektrische Verbraucher 55 mit Funktionserhalt bei Brand zu versorgen. Bei 55 befindet sich eine Richtungsänderung des Tunnels 54. Dort ist eine Flachkabel-Umlenkvorrichtung 38 der oben beschriebenen Art angeordnet, an welcher das Flachkabel 1 ohne Neigungsänderung entsprechend der Richtungsänderung 56 umgelenkt ist. Die Darstellung der Figur 17 ist wiederum nur beispielhaft; die Zahl der bei einer solchen Installation zum Einsatz gelangenden Installationselemente kann größer oder kleiner als in Figur 17 sein, einzelne Elemente können auch ganz fehlen.

Insgesamt stellt die Erfindung damit ein neuartiges, Funktionserhalt gewährleistendes Installationssystem und dessen ggf. auch vorteilhaft einzeln einsetzbare Teile bereit, welches auf der besonderen inhärenten Eignung des Flachkabels für Funktionserhaltanwendungen beruht.

## Patentansprüche

1. Flachkabel-Umlenkvorrichtung (38), umfassend
einen zylindrischen Kabelumlenkkörper (39), und
eine Halterung (41) für den zylindrischen Kabelumlenkkörper (39), die so vom zylindrischen Kabelumlenkkörper (39) beabstandet ist, dass sie dessen Umschlingung mit dem Flachkabel (1) erlaubt, ohne dieses zu berühren.
**dadurch gekennzeichnet dass** die Fluchkabel-Umlenkvorrichtung (38) einen Funktionserhalt bei Brand gewährleistet, wobei
der Kabelumlenkkörper (39) aus feuerbeständigem isolierenden Material ist, und
die Halterung (41) aus feuerbeständigem Material ist.

2. Flachkabel-Umlenkvorrichtung (38) nach Anspruch 1, wobei der zylindrische Kabelumlenkkörper (39) prolat ist.

3. Flachkabel-Umlenkvorrichtung (38) nach Anspruch 1 oder 2, wobei das feuerbeständige isolierende Material des zylindrischen Kabelumlenkkörpers (39) Glas oder Keramik ist, und/oder wobei das feuerbeständige Material der Halterung (41) Metall ist.

4. Flachkabel-Umlenkvorrichtung (38) nach einem der Ansprüche 1 - 3, wobei die Halterung eine Anbringung des zylindrischen Kabelumlenkkörpers (39) unter verschiedenen Winkeln relativ zur Halterung (41) erlaubt.

5. Flachkabel-Umlenkvorrichtung (38) nach Anspruch 4, wobei die Halterung (41) die beiden Enden des zylindrischen Kabelumlenkkörpers (39) gabelartig hält und hierfür Anbaupositionen unter verschiedenen Winkeln vorsieht.

6. Flachkabel-Umlenkvorrichtung (38) nach Anspruch 4 oder 5, wobei die Anbringung des zylindrischen Kabelumlenkkörpers (39) unter verschiedenen Winkeln durch Langlochbefestigung (42) ermöglicht ist.

7. Flachkabel-Umlenkvorrichtung (38) nach einem der Ansprüche 1 - 6, wobei über dem zylindrischen Kabelumlenkkörper (39) eine Abdeckung (45) vorgesehen ist.

8. Elektrische Installation (53), umfassend
wenigstens eine Flachkabel-Umlenkvorrichtung (38) nach einem der Ansprüche 1 - 7,
wenigstens ein Flachkabel (1) mit mehreren, parallel nebeneinander in einer Ebene verlaufenden Starkstromadern (2), das über die Umlenkvorrichtung (38) läuft und an ihr seine Richtung ändert,
wobei die Kabelquerrichtung (Q) vor und nach der Umlenkvorrichtung (38) horizontal verläuft, und
wobei das Flachkabel (1) den zylindrischen Kabelumlenkkörper (39) wenigstens teilweise umschlingt.

9. Elektrische Installation (53) nach Anspruch 8, wobei das Flachkabel (1) mit seiner Längsrichtung vor und nach der Umlenkvorrichtung (38) horizontal oder mit der gleichen Neigung zur Horizontalen verläuft, und die Achse (A) des zylindrischen Kabelumlenkkörpers (39) quer zur Winkelhalbierenden (WH) der Kabellängsrichtungen (L1, L1) vor und nach der Umlenkvorrichtung (38) orientiert ist.

10. Elektrische Installation (53) nach Anspruch 8 oder 9, wobei der Umschlingungswinkel (u) des Flachkabels (1) auf dem zylindrischen Kabelumlenkkörper (39) 180° beträgt.

11. Elektrische Installation (53) nach Anspruch 8, wobei sich die Kabellängsrichtung an der Umlenkvorrichtung (38) gegenüber der Horizontalen ändert, und die Achse (A) des zylindrischen Kabelumlenkkörpers (39) quer zur Kabellängsrichtung (L1, L2) vor und nach der Umlenkvorrichtung (38) orientiert ist.

12. Installationssatz (51) für eine elektrische Installation (53) mit Funktionserhalt bei Brand, mit wenigstens einer Flachkabel-Umlenkvorrichtung (38) nach einem der Ansprüche 1 - 7 und einem Flachkabel (1) mit mehreren, parallel nebeneinander in einer Ebene verlaufenden Starkstromadern (2).

13. Installationssatz (51) nach Anspruch 12, mit wenigstens einer Anschlussvorrichtung (12) zum abisolierfreien Anzapfen des Flachkabels (1).

14. Installationssatz (51) nach Anspruch 12 mit einer Flachkabelführung mit Funktionserhalt bei Brand, umfassend
wenigstens einen Träger (46) für ein Flachkabel (1),
eine Aufnahme (49) aus feuerbeständigem isolierenden Material, wie Glas oder Keramik, die auf dem Träger (46) angeordnet ist und in die das Flachkabel (1) einlegbar ist.

## Claims

1. Flat cable deflection device (38), comprising a cylindrical cable deflection body (39), and a mounting (41) for the cylindrical cable deflection body (39), which is so spaced from the cylindrical cable deflection body (39) that it allows the flat cable (1) to be wrapped around the said body without contacting it,
**characterised in that**
the flat cable deflection device (38) ensures retention of function in the event of fire, wherein the cylindrical cable deflection body (39) is of fire-resistant insulating material, and the mounting (41) is of fire-resistant material.

2. Flat cable deflection device (38) in accordance with claim 1, wherein the cable deflection body is prolate.

3. Flat cable deflection device (38) in accordance with claim 1 or 2, wherein the fire-resistant material of the cylindrical cable deflection body (39) is glass or ceramic, and/or wherein the fire-resistant material of the mounting (41) is metal.

4. Flat cable deflection device (38) in accordance with one of the claims 1 - 3, wherein the mounting allows attachment of the cylindrical cable deflection body (39) at various angles relative to the mounting (41).

5. Flat cable deflection device (38) in accordance with claim 4, wherein the mounting (41) holds the two ends of the cylindrical cable deflection body (39) in a fork-like arrangement and the attachment positions required for this provide for different angles.

6. Flat cable deflection device (38) in accordance with claim 4 or 5, wherein the attachment of the cylindrical cable deflection body (39) at different angles is facilitated by a slotted hole fastening (42).

7. Flat cable deflection device (38) in accordance with one of the claims 1-6, wherein a cover (45) is provided over the cylindrical cable deflection body (39).

8. Electrical installation (53), comprising at least one flat cable deflection device (38) in accordance with one of the claims 1 - 7, at least one flat cable (1) comprising a plurality of heavy current conductors (2) running parallel and adjacent to one another in a plane (2) and when running over the deflection device (38) changes its direction, whereby the cable transverse direction (Q) runs horizontally before and after the deflection device (38), and wherein the flat cable (1) at least partially wraps around the cylindrical cable deflection body (39).

9. Electrical installation (53) in accordance with claim 8, wherein the longitudinal direction of the flat cable (1) runs horizontally or at a slight inclination to the horizontal before and after the deflection device (38), and the axis (A) of the cylindrical cable deflection body (39) is oriented transverse to the angle (WH) bisecting the cable longitudinal directions (L1, L1) before and after the deflection device (38).

10. Electrical installation (53) in accordance with claim 8 or 9, wherein the angle (u) over which the flat cable (1) wraps around the cylindrical cable deflection body (39) is 180°.

11. Electrical installation (53) in accordance with claim 8, wherein the cable longitudinal direction on the deflection device (38) varies with respect to the horizontal, and the axis (A) of the cylindrical cable deflection body (39) is oriented transverse to the cable longitudinal direction (L1, L2) before and after the deflection device (38).

12. Installation kit (51) for an electrical installation (53) with retention of function in the event of fire, with at least one flat cable deflection device (38) in accordance with claims 1 - 7 and a flat cable (1) with a plurality of heavy current conductors (2) running parallel and adjacent to one another in a plane.

13. Installation kit (51) in accordance with claim 12, with at least one connection device (12) for tapping the flat cable (1) without removing the insulation.

14. Installation kit (51) in accordance with claim 12 with a flat cable guide retaining function in the event of fire, comprising at least one support (46) for a flat cable (1), a receptacle (49) of fire-resistant insulating material, such as glass or ceramic, which is disposed on the support (46) and in which the flat cable (1) can be laid.

## Revendications

1. Dispositif de déviation de câble plat (38), comprenant un corps cylindrique de déviation de câble (39), et
un support (41) pour le corps cylindrique de déviation de câble (39), lequel est espacé du corps cylindrique de déviation de câble (39) de manière à permettre son enroulement avec le câble plat (1) sans contacter celui-ci,
**caractérisé en ce que** ledit dispositif de déviation de câble plat (38) assure un maintien d'intégrité fonctionnelle en cas de feu,
le corps de déviation de câble (39) étant en matériau isolant résistant au feu et
le support (41) étant en matériau résistant au feu.

2. Dispositif de déviation de câble plat (38) selon la revendication 1, où le corps cylindrique de déviation de câble (39) est de forme prolate.

3. Dispositif de déviation de câble plat (38) selon la revendication 1 ou 2, où le matériau isolant résistant au feu du corps cylindrique de déviation de câble (39) est du verre ou de la céramique, et/ou où le matériau résistant au feu du support (41) est du métal.

4. Dispositif de déviation de câble plat (38) selon l'une des revendications 1 à 3, où le support permet une application du corps cylindrique de déviation de câble (39) sous différents angles par rapport au support (41).

5. Dispositif de déviation de câble plat (38) selon la revendication 4, où le support (41) maintient en forme de fourche les deux extrémités du corps cylindrique de déviation de câble (39) et prévoit à cet effet des positions de montage sous différents angles.

6. Dispositif de déviation de câble plat (38) selon la revendication 4 ou 5, où l'application du corps cylindrique de déviation de câble (39) sous différents angles est permise par une fixation à trou oblong (42).

7. Dispositif de déviation de câble plat (38) selon l'une des revendications 1 à 6, où un couvercle (45) est prévu au-dessus du corps cylindrique de déviation de câble (39).

8. Installation électrique (53), comprenant
au moins un dispositif de déviation de câble plat (38) selon l'une des revendications 1 à 7,
au moins un câble plat (1) avec plusieurs conducteurs de courant fort (2) s'étendant parallèlement entre eux sur un plan, lequel passe sur le dispositif de déviation (38) et change de direction contre celui-ci,
où la direction transversale du câble (Q) s'étend horizontalement en amont et en aval du dispositif de déviation (38), et
où le câble plat (1) entoure au moins en partie le corps cylindrique de déviation de câble (39).

9. Installation électrique (53) selon la revendication 8, où la direction longitudinale du câble plat (1) s'étend horizontalement ou avec la même inclinaison par rapport à l'horizontale en amont et en aval du dispositif de déviation (38), et où l'axe (A) du corps cylindrique de déviation de câble (39) est orienté perpendiculairement à la bissectrice (WH) des directions longitudinales de câble (L1, L1) en amont et en aval du dispositif de déviation (38).

10. Installation électrique (53) selon la revendication 8 ou 9, où l'angle d'enroulement (u) du câble plat (1) sur le corps cylindrique de déviation de câble (39) est de 180°.

11. Installation électrique (53) selon la revendication 8, où la direction longitudinale du câble change par rapport à l'horizontale contre le dispositif de déviation (38), et où l'axe (A) du corps cylindrique de déviation de câble (39) est orienté perpendiculairement à la direction longitudinale de câble (L1, L2) en amont et en aval du dispositif de déviation (38).

12. Ensemble d'installation (51) pour une installation électrique (53) avec maintien d'intégrité fonctionnelle en cas de feu, comportant au moins un dispositif de déviation de câble plat (38) selon l'une des revendications 1 à 7 et un câble plat (1) à plusieurs conducteurs de courant fort (2) s'étendant parallèlement entre eux sur un plan.

13. Ensemble d'installation (51) selon la revendication 12, avec au moins un dispositif de connexion (12) pour le raccordement sans dénudage du câble plat (1).

14. Ensemble d'installation (51) selon la revendication 12 avec un guidage de câble plat avec maintien d'intégrité fonctionnelle en cas de feu, comprenant
au moins un support (46) pour un câble plat (1),
une réception (49) en matériau isolant résistant au feu, tel que le verre ou la céramique, disposée sur le support (46) et dans laquelle le câble plat (1) est insérable.
